# EUROPEAN PATENT APPLICATION

(11) **EP 4 693 046 A1**
(43) Date of publication of application: **11.02.2026**
(21) Application number: 25194464.1
(22) Date of filing: 06.08.2025
(51) Int. Cl.: G06F 9/50, G06N 10/80

(54) **SYSTEM FOR RESOURCE ALLOCATION IN A HYBRID DISTRIBUTED COMPUTATIONAL ENVIRONMENT**

(30) Priority: 06.08.2024 US 202418795530; 04.11.2024 LU 103441
(71) Applicant: Nvidia Corporation, Santa Clara, CA 95051 (US)
(72) Inventor: SEIFOORY, Hossein, Santa Clara, 95051 (US); ALBRIGHT, Ryan, Santa Clara, 95051 (US); MENTOVICH, Elad, Santa Clara, 95051 (US)
(74) Representative: Mathys & Squire

(57) **Abstract**

Systems, computer program products, and methods are described for resource allocation in a hybrid distributed computational environment. An example system segments a received task into multiple sub-tasks. Upon partitioning the task, each sub-task is assigned to the appropriate computational resource (e.g., CPU, GPU, or QPU), enabling parallel execution of multiple sub-tasks. Both task partitioning and computational resource determination is determined using a machine learning model. Additionally, the machine learning model may continuously monitor the execution of each sub-task by receiving resource utilization information and performance metrics associated with the execution of each sub-task. The resource utilization information and performance metrics may then be used to update the machine learning model.

## Description

### TECHNOLOGICAL FIELD

Example embodiments of the present disclosure relate to resource allocation in a hybrid distributed computational network.

### BACKGROUND

Quantum computing has the potential to address complex problems that are beyond the reach of classical computers. However, executing a computationally intensive task using only quantum computational resources may not be efficient due to the large number of qubits required, which are often not available within a single Quantum Processing Unit (QPU). Additionally, having a large number of qubits can make simulating the computationally intensive task on central processing units (CPUs) and graphical processing units (GPUs) impractical due to memory issues.

Applicant has identified a number of deficiencies and problems associated with resource allocation in a hybrid distributed computational network. Many of these identified problems have been solved by developing solutions that are included in embodiments of the present disclosure, many examples of which are described in detail herein.

### GENERAL DESCRIPTION

Systems, methods, and computer program products are therefore provided for resource allocation in a hybrid distributed computational network. The invention is defined by the claims. In order to illustrate the invention, aspects and embodiments which may or may not fall within the scope of the claims are described herein. Systems, computer program products, and methods are described for resource allocation in a hybrid distributed computational environment. An example system segments a received task into multiple sub-tasks. Upon partitioning the task, each sub- task is assigned to the appropriate computational resource (e.g., CPU, GPU, or QPU), enabling parallel execution of multiple sub-tasks. Preferably, both task partitioning and computational resource determination is determined using a machine learning model. Additionally, the machine learning model may continuously monitor the execution of each sub-task by receiving resource utilization information and performance metrics associated with the execution of each sub-task. The resource utilization information and performance metrics may then be used to update the machine learning model.

In one aspect of the disclosure, a system for resource allocation in a hybrid distributed computational environment is presented. The system comprising: a machine learning circuitry configured to: receive a quantum circuit, circuit execution parameters, and information associated with computational resources; and determine, using a machine learning model, quantum circuit partitioning parameters for the quantum circuit based on the quantum circuit, the circuit execution parameters, and the information associated with computational resources; and a quantum circuit partitioning circuitry operatively coupled to the machine learning circuitry and configured to: partition the quantum circuit into a plurality of quantum sub-circuits based on the quantum circuit partitioning parameters.

In some embodiments, the machine learning circuitry is further configured to: determine, using the machine learning model, a computational resource for each quantum sub-circuit based on the quantum circuit, the circuit execution parameters, the information associated with computational resources, and a computational resource type associated with the computational resource; determine an execution sequence for execution of the quantum sub-circuits using corresponding computational resources; and initiate the execution of the quantum sub-circuits according to the execution sequence.

In some embodiments, a resource allocation circuitry operatively coupled to the machine learning circuitry and the quantum circuit partitioning circuitry is configured to: allocate each quantum sub-circuit to the corresponding computational resource.

In some embodiments, the machine learning circuitry is further configured to: train the machine learning model using a plurality of known quantum circuits, a plurality of known quantum sub-circuits for each known quantum circuit, known circuit execution parameters for each known quantum circuit, and known information associated with the computational resources at a time of execution of the known quantum circuit, wherein determining the quantum circuit partitioning parameters for the quantum circuit comprises using the trained machine learning model.

In some embodiments, at least a subset of the quantum sub-circuits is executed concurrently, thereby accelerating the execution of the quantum circuit.

In some embodiments, the machine learning circuitry is further configured to: monitor the execution of each quantum sub-circuit; receive resource utilization information and performance metrics associated with the execution of each quantum sub-circuit based on at least the monitoring; and update the machine learning model using the resource utilization information and the performance metrics.

In some embodiments, the machine learning circuitry is further configured to: determine, using the updated machine learning model, updated quantum circuit partitioning parameters for the quantum circuit, wherein partitioning the quantum circuit into quantum sub-circuits further comprises using the updated quantum circuit partitioning parameters.

In some embodiments, the machine learning circuitry is further configured to: determine, using the updated machine learning model, an updated execution sequence for execution of the quantum sub-circuits, wherein initiating the execution of the quantum sub-circuits comprises using the updated execution sequence.

In some embodiments, the computational resources comprise at least one of a classical computational resource or a quantum computational resource, wherein the classical computational resource comprises a central processing unit (CPU) or a graphics processing unit (GPU), and wherein the quantum computational resource comprises a quantum processing unit (QPU), wherein the classical computational resource is configured to simulate a subset of quantum sub-circuits in parallel, thereby accelerating execution of the quantum circuit.

In some embodiments, the information associated with the computational resources comprises at least one of resource availability, processing power, memory, utilization rate, execution time estimates, cost metrics, temperature and thermal limits, failure rate, resource health, or load balancing policies. The information associated with the computational resource may be 'current' information. The information associated with the computational resources, resource utilization information and/or performance metrics may be received from one or more data centers or hybrid data centers comprising the computational resources.

In some embodiments, the circuit execution parameters comprise at least one of an execution time, a quantum execution cost, a classical execution cost, a quantum state fidelity, gate error propagation, total circuit output error, or error tolerance.

In another aspect of the disclosure, a method for resource allocation in a hybrid distributed computational environment is presented. The method comprising: receiving, using a machine learning circuitry, a quantum circuit, circuit execution parameters, and information associated with computational resources; determining, using a machine learning model associated with the machine learning circuitry, quantum circuit partitioning parameters for the quantum circuit based on the quantum circuit, the circuit execution parameters, and the information associated with computational resources; and partitioning, using a quantum circuit partitioning circuitry, the quantum circuit into a plurality of quantum sub-circuits based on the quantum circuit partitioning parameters.

In yet another aspect of the disclosure, a computer program product for resource allocation for hybrid quantum computation is presented. The computer program product comprising a non-transitory computer-readable medium comprising code that, when executed by a processor, causes a processor to: receive, using a machine learning circuitry, a quantum circuit, circuit execution parameters, and information associated with computational resources; determine, using a machine learning model associated with the machine learning circuitry, quantum circuit partitioning parameters for the quantum circuit based on the quantum circuit, the circuit execution parameters, and the information associated with computational resources; and partition, using a quantum circuit partitioning circuitry, the quantum circuit into a plurality of quantum sub-circuits based on the quantum circuit partitioning parameters.

In still other aspects of the disclosure, a system for resource allocation in a hybrid distributed computational environment is presented. The system comprising: a task partitioning circuitry configured to: receive a task, task execution parameters, and information associated with computational resources, wherein the computational resources comprise at least one of a classical computational resource or a quantum computational resource, wherein the classical computational resource comprises a central processing unit (CPU) or a graphics processing unit (GPU), and wherein the quantum computational resource comprises a quantum processing unit (QPU); and partition the task into sub-tasks based on the task execution parameters and the information associated with computational resources; and a resource allocation circuitry operatively coupled to the task partitioning circuitry and configured to: allocate each sub-task to the classical computational resource or the quantum computational resource.

In some embodiments, the task is a quantum circuit, and wherein the sub-tasks are quantum sub-circuits. The system may comprise one or more data centers or hybrid data centers comprising the computational resources.

In some embodiments, a machine learning circuitry operatively coupled to the task partitioning circuitry is configured to: determine, using a machine learning model, task partitioning parameters for the task based on the task, the task execution parameters, and the information associated with computational resources, wherein partitioning the task into sub-tasks further comprises using the task partitioning parameters.

In some embodiments, the machine learning circuitry is further configured to: determine, using the machine learning model, the computational resource for each sub-task based on the task, the task execution parameters, the information associated with computational resources, and a computational resource type associated with the computational resource.

In some embodiments, the machine learning circuitry is further configured to: train the machine learning model using a plurality of known tasks, a plurality of known sub-tasks for each known task, known task execution parameters for each known task, and known information associated with the computational resources at a time of execution of the known task, wherein determining the task partitioning parameters for the task comprises using the trained machine learning model.

In some embodiments, the machine learning circuitry is further configured to: determine, using the machine learning model, an execution sequence for execution of the sub-tasks using corresponding computational resources; and initiate the execution of the sub-tasks according to the execution sequence.

In some embodiments, the sub-tasks are executed using the classical computational resources and quantum computational resources, and wherein at least a subset of the sub-tasks is executed concurrently, thereby accelerating the execution of the task.

In some embodiments, the machine learning circuitry is further configured to: monitor the execution of each sub-task; receive resource utilization information and performance metrics associated with the execution of each sub-task based on at least the monitoring; and update the machine learning model using the resource utilization information and the performance metrics.

In some embodiments, the machine learning circuitry is further configured to: determine, using the updated machine learning model, updated task partitioning parameters for the task, wherein partitioning the task into sub-tasks further comprises using the updated task partitioning parameters.

In some embodiments, the machine learning circuitry is further configured to: determine, using the updated machine learning model, an updated execution sequence for execution of the sub-tasks, wherein initiating the execution of the sub-tasks comprises using the updated execution sequence.

In some embodiments, the information associated with the computational resources comprises at least one of resource availability, processing power, memory, utilization rate, execution time estimates, cost metrics, temperature and thermal limits, failure rate, resource health, or load balancing policies. The information associated with the computational resource may be 'current' information. The information associated with the computational resources, resource utilization information and/or performance metrics may be received from one or more data centers or hybrid data centers comprising the computational resources. The method may comprise receiving the information from the one or more data centers or hybrid data centers.

In some embodiments, the task execution parameters comprise at least one of an execution time, a quantum execution cost, a classical execution cost, a quantum state fidelity, gate error propagation, total task output error, or error tolerance.

In some embodiments, the task partitioning circuitry is further configured to: receive a plurality of tasks, task execution parameters associated with each task, and information associated with computational resources; and partition each task into a plurality of sub-tasks based on the corresponding task execution parameters and the information associated with computational resources; the resource allocation circuitry is further configured to: allocate each of the plurality of sub-tasks to the classical computational resource and the quantum computational resource, wherein the plurality of tasks is executed by the classical computational resource and the quantum computational resource in parallel.

In still other aspects of the disclosure, a method for resource allocation in a hybrid distributed computational environment is presented. The method comprising: receiving a task, task execution parameters, and information associated with computational resources, wherein the computational resources comprise at least one of a classical computational resource or a quantum computational resource, wherein the classical computational resource comprises a central processing unit (CPU) or a graphics processing unit (GPU), and wherein the quantum computational resource comprises a quantum processing unit (QPU); partitioning the task into sub-tasks based on the task execution parameters and the information associated with computational resources; and allocating each sub-task to the classical computational resource or the quantum computational resource.

In still other aspects, a computer program product for resource allocation in a hybrid distributed computational environment is presented. The computer program product comprising a non-transitory computer-readable medium comprising code that, when executed by a processor, causes a processor to: receive, using a task partitioning circuitry, a task, task execution parameters, and information associated with computational resources, wherein the computational resources comprise at least one of a classical computational resource or a quantum computational resource, wherein the classical computational resource comprises a central processing unit (CPU) or a graphics processing unit (GPU), and wherein the quantum computational resource comprises a quantum processing unit (QPU); partition, using the task partitioning circuitry, the task into sub-tasks based on the task execution parameters and the information associated with computational resources; and allocate, using a resource allocation circuitry, each sub-task to the classical computational resource or the quantum computational resource. The disclosure extends to any novel aspects or features described and/or illustrated herein. Further features of the disclosure are characterized by the independent and dependent claims. Any feature in one aspect of the disclosure may be applied to other aspects of the disclosure, in any appropriate combination. In particular, method aspects may be applied to apparatus or system aspects, and vice versa. Furthermore, features implemented in hardware may be implemented in software, and vice versa. Any reference to software and hardware features herein should be construed accordingly. Any system or apparatus feature as described herein may also be provided as a method feature, and vice versa. System and/or apparatus aspects described functionally (including means plus function features) may be expressed alternatively in terms of their corresponding structure, such as a suitably programmed processor and associated memory. It should also be appreciated that particular combinations of the various features described and defined in any aspects of the disclosure can be implemented and/or supplied and/or used independently. The disclosure also provides computer programs and computer program products comprising software code adapted, when executed on a data processing apparatus, to perform any of the methods and/or for embodying any of the apparatus and system features described herein, including any or all of the component steps of any method. The disclosure also provides a computer or computing system (including networked or distributed systems) having an operating system which supports a computer program for carrying out any of the methods described herein and/or for embodying any of the apparatus or system features described herein. The disclosure also provides a computer readable media having stored thereon any one or more of the computer programs aforesaid. The disclosure also provides a signal carrying any one or more of the computer programs aforesaid. The disclosure extends to methods and/or apparatus and/or systems as herein described with reference to the accompanying drawings. Aspects and embodiments of the disclosure will now be described purely by way of example, with reference to the accompanying drawings.

### BRIEF DESCRIPTION OF THE DRAWINGS

Having described certain example embodiments of the present disclosure in general terms above, reference will now be made to the accompanying drawings. The components illustrated in the figures may or may not be present in certain embodiments described herein. Some embodiments may include fewer (or more) components than those shown in the figures.
FIGS. 1A-1B illustrate an example system environment for resource allocation in a hybrid distributed computational environment, in accordance with an embodiment of the present disclosure;
FIG. 2 illustrates training and deployment of a deep neural network, in accordance with an embodiment of the disclosure;
FIGS. 3A and 3B illustrate example embodiments for allocation of computational resources to sub-tasks, in accordance with an embodiment of the present disclosure;
FIG. 4 illustrates a method for resource allocation in a hybrid distributed computational environment, in accordance with an embodiment of the present disclosure;
FIG. 5 illustrates a method for task partitioning using machine learning techniques, in accordance with an embodiment of the disclosure;
FIG. 6 illustrates a method for updating the machine learning model, in accordance with an embodiment of the disclosure;
FIG. 7 illustrates an example block diagram of a GPU/CPU (e.g., a block diagram of the GPU/CPU, in accordance with an embodiment of the disclosure; and FIG. 8 illustrates an example quantum computational resource for executing sub-tasks, in accordance with an embodiment of the disclosure.

### DETAILED DESCRIPTION

### Overview

Computational pipelines involve distributions of computational tasks among multiple nodes (computing devices) with various nodes executing one or more computational sub-tasks. Data input into a particular node may be output data generated by a previous node as part of a computational sub-task assigned to the previous node. Various nodes may include different processing and memory devices and may specialize in different types of computational sub-tasks. Some nodes may be capable of efficient serial processing while some nodes may more efficiently perform graphics processing, and so on. Data may be transferred between different nodes via networks.

Computational pipelines that distribute sub-tasks among multiple nodes enable scaled execution of computational tasks with dedicated nodes performing assigned functions. Such specialization of distributed computing systems result in an efficient utilization of hardware and software resources. Computationally-intensive applications may include image and video processing, medical imaging, simulation and rendering, object recognition, and so on. In at least one embodiment, applications may use machine learning algorithms (including use of one or more neural network models). A pipeline may sometimes be represented in the form of a graph that has nodes connected by edges, with nodes indicating computational sub-tasks and edges corresponding to a flow (e.g., order) of execution and direction of data flows between nodes. In at least one embodiment, a graph may be a directed acyclic graph (DAG) in which data flows along directed edges and no sequence of directed edges loops back to the earlier nodes in the graph. One or more sub-tasks assigned to a given node may be executed using computational resources of a separate computing device (e.g., server) or multiple computing devices. In at least one embodiment, multiple nodes may be executed on different resources of the same computing device. Depending on a sub-task being assigned to a particular node, the sub-task may be executed on one or more CPUs (e.g., for serial or heavy computational processing), one or more GPUs (for parallel, e.g., graphics, processing), or a combination of CPU(s) and GPU(s). In some instances, CPU and/or GPU may be physical processing units (physical CPU and/or physical GPU). In some implementations, CPU and/or GPU may be virtual CPU (vCPU) and/or virtual GPU (vGPU) supported by physical processing units, with each physical CPU and/or GPU supporting operations of multiple vCPUs and/or vGPUs. In some instances a physical processing device of a particular type (e.g., a physical CPU) may support operation of virtual processing devices of multiple types. For example a single physical CPU (or physical GPU) may support a one or more vCPUs and one or more vGPUs. A reference throughout this disclosure to a CPU and/or GPU should be understood to apply to both physical or virtual respective processing units.

Efficiency of the pipeline execution depends on the optimal allocation of resources, e.g., on optimal distribution of sub-tasks among nodes. A number of problems and challenges may be encountered in optimization of a pipeline execution. For example, tasks that are assigned to CPU(s) may be more efficiently executed on GPU(s). Similarly, a task assigned to and executed on a CPU or GPU may not be utilizing the respective processing devices efficiently, and so on. In many such or similar instances, it may be difficult for a developer to identify these inefficiencies. In some instances, a bottleneck can be formed when too many sub-tasks are scheduled for CPU execution while GPU resources are idling (or vice versa). In some instances, application developers may use toolkits (which may include multiple sequences of pre-packaged processor operations or routines) that interact with CPU(s) and/or GPU(s) in a way that may be unknown to the developer (or at least partially obscured). As a result, the developer's efforts to optimize application execution may be limited by the architecture of the toolkits. Without detailed processor performance metrics, a developer may not be able to maximize efficiency of the pipeline execution. In some instances, multiple tasks (each corresponding to a different pipeline) may be executed concurrently on the same shared distributed computing resources (e.g., processing, memory, network resources, etc.). Optimization of such a concurrent execution may be enabled by tracking how various tasks interact with each other. For example, if it is known that a first task has a peak computational demand at a first time and a second task has a peak demand at a second, different time, the two tasks may be scheduled in a staggered fashion where the respective peak times do not overlap (or minimally overlap) with each other.

Existing methods and approaches are limited to monitoring individual physical nodes, where a node's main memory usage, GPU memory usage, CPU/GPU utilization, network bandwidth utilization, network traffic data, input/output (I/O) traffic data, and the like, are measured. However, existing systems and methods do not provide functionality to monitor execution of tasks of distributed pipelines performed on multiple physical nodes. Moreover, existing GPU performance analyzers are limited to providing postprocessing analyses and lack real-time monitoring functionality. Furthermore, available GPU performance analyzers are designed for developers familiar with GPU architecture and are less useful for application developers in such fields as machine learning, computer vision, etc., whose knowledge of hardware may be more limited.

Quantum computers represent a cutting-edge paradigm in computing, harnessing the unique properties of quantum mechanics to perform specific complex calculations at unprecedented speeds. Despite their capabilities, current quantum computers face two major obstacles: limited qubits and environmental noise. The number of operational qubits on existing platforms typically remains in the tens to hundreds, which is insufficient for executing complex algorithms in fields such as drug discovery or material simulations that may require millions or billions of qubits. This limitation necessitates research into novel architectures and distributed computing paradigms to achieve effective scaling of qubit resources. Distributed quantum computing offers a solution by dividing a large quantum circuit into smaller circuits and assigning them to separate, independent quantum processing units (QPUs). One well-known method, circuit cutting, implements large quantum circuits by breaking them into many smaller-width circuits.

Another challenge with current quantum computers is the inherent fragility of quantum information, which is susceptible to decoherence caused by environmental interactions and fluctuations. Such quantum noise introduces errors that disrupt the coherence and fidelity of computational states. To address this, error correction techniques are necessary to mitigate the impact of noise and establish reliable quantum operations. Longer quantum circuits have a higher chance of being affected by the environment, leading to loss of coherence. Therefore, reducing the length of quantum circuits is important to minimize environmental impact and improve results.

In parallel with efforts to develop practical quantum computers, there is a complementary initiative to leverage classical resources-specifically, central processing units (CPUs) and graphics processing units (GPUs)-to simulate quantum computation. By leveraging the computational power of conventional hardware, the behavior of quantum systems may be emulated, providing a bridge between theoretical exploration and practical implementation. Emulating behaviors of quantum systems using classical computational resources may be used to probe the capabilities and limitations of quantum algorithms, refining their performance, and facilitating an understanding of the complex dynamics of quantum phenomena.

However, emulating behaviors of quantum systems using classical computational resources may have drawbacks. These limitations may primarily include issues of scalability and accuracy. Emulating the behaviors of large quantum systems may be challenging due to the exponential growth in complexity and the required resources, which may restrict the scope of such simulations. Additionally, emulating behaviors of quantum systems using classical computational resources may not perfectly capture all aspects of the quantum systems, especially as the complexity increases, necessitating careful interpretation of the results.

Considering the limitations of both quantum computational resources and emulating behaviors of quantum systems using classical computational resources, there is a need for a hybrid computational approach to address these challenges to leverage available classical (e.g., CPUs, GPUs) and quantum computational resources (e.g., QPUs) for efficient task processing. Combining the use of quantum computational resources and the emulation of quantum system behavior using classical computational resources may leverage the strengths of each approach to mitigate their respective weaknesses. These techniques involve dividing large, complex computational/computing/calculation tasks, such as the execution of quantum circuits, into smaller, more manageable sub-tasks. A computational task performed may be referred to as a parallel computing task, in that the task is divided into multiple subtasks that are performed in parallel. The computational tasks may include various forms of data analysis, optimization problems, machine learning algorithms, and simulations of quantum phenomena, such as quantum computing tasks. Task partitioning allows the computation to be distributed across the available computational resources, thereby making it more feasible to handle within the constraints of current hardware capabilities. While task partitioning makes computation more manageable with available computational resources, the primary challenge lies in identifying the optimal configuration of sub-tasks to maximize efficiency and performance. This highlights the need for a hybrid computational approach that leverages available classical computational resources and quantum computational resources to determine optimal task partitioning to enhance efficiency and reduce errors.

Embodiments of the disclosure address the issue of optimal task partitioning based on available computational resources, computation cost, potential errors, and overall execution time by employing machine learning techniques. This technique reduces the need for extensive quantum resources required for large-scale quantum computation by balancing the computational load between CPUs, GPUs, and QPUs. The QPUs are configured to perform one or more operations associated with a quantum algorithm. Each of the one or more QPUs may include a plurality of qubits and the one or more QPUs may be in communication with each other via a quantum channel. Each of the plurality of qubits may include local qubits, global qubits, and/or synchronization qubits. A large quantum circuit is divided into smaller quantum sub-circuits that can be handled by available resources such as CPUs, GPUs, and QPUs. Unlike traditional circuit cutting methods that primarily consider the number of qubits and circuit cutting rules, this disclosure also evaluates the cost of running on quantum resources, potential error introduction in long quantum circuits, and execution time. A machine learning based resource management system takes these parameters into account for optimal resource allocation determination. This approach minimizes the dependency on quantum resources alone, distributing the computational load more efficiently. Continuous learning and feedback mechanisms collect performance data, enabling the machine learning model to update and retrain, ensuring more adaptive and efficient task allocation. This approach improves the overall performance of hybrid computing environments by effectively utilizing both classical and quantum resources. An example system may include machine learning circuitry that receives a task, task execution parameters, and information associated with available computational resources. The machine learning circuitry may deploy a trained machine learning model to determine task partitioning parameters that may be used to partition the task into smaller sub-tasks based on this data. The efficiency of this partitioning process is significantly enhanced by having detailed knowledge of both the task and the available computational resources. Upon partitioning the task into sub-tasks, the task partitioning circuitry may then assign each sub-task to the appropriate computational resource (e.g., a CPU, GPU, or QPU), enabling parallel execution of multiple sub-tasks. The appropriate computational resource may be determined based on several factors, including resource availability, processing power, memory, and/or similar factors, as well as execution parameters such as execution time, execution cost, error tolerance, and/or similar parameters. Also, the machine learning model may determine an execution sequence for the execution of the sub-tasks. Additionally, the machine learning model may continuously monitor the execution of each sub-task by receiving resource utilization information and performance metrics associated with the execution of each sub-task. The resource utilization information and performance metrics may then be used to update the machine learning model. This allows for dynamic adjustments to execution decisions (e.g., scheduling and sequencing) as needed, for ongoing optimization of task assignments in the hybrid data center environment.

Embodiments of the present disclosure will now be described more fully hereinafter with reference to the accompanying drawings, in which some, but not all, embodiments of the present disclosure are shown. Indeed, the present disclosure may be embodied in many different forms and should not be construed as limited to the embodiments set forth herein; rather, these embodiments are provided so that this disclosure will satisfy applicable legal requirements. Thus, it should be understood that each block of the block diagrams and flowchart illustrations may be implemented in the form of a computer program product; an entirely hardware embodiment; an entirely firmware embodiment; a combination of hardware, computer program products, and/or firmware; and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some exemplary embodiments, retrieval, loading, and/or execution may be performed in parallel such that multiple instructions are retrieved, loaded, and/or executed together. Thus, such embodiments may produce specifically-configured machines performing the steps or operations specified in the block diagrams and flowchart illustrations. Accordingly, the block diagrams and flowchart illustrations support various combinations of embodiments for performing the specified instructions, operations, or steps.

Where possible, any terms expressed in the singular form herein are meant to also include the plural form and vice versa, unless explicitly stated otherwise. Also, as used herein, the term "a" and/or "an" shall mean "one or more," even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on." Like numbers refer to like elements throughout.

As used herein, "operatively coupled" may mean that the components are electronically or optically coupled and/or are in electrical or optical communication with one another. Furthermore, "operatively coupled" may mean that the components may be formed integrally with each other or may be formed separately and coupled together. Furthermore, "operatively coupled" may mean that the components may be directly connected to each other or may be connected to each other with one or more components (e.g., connectors) located between the components that are operatively coupled together. Furthermore, "operatively coupled" may mean that the components are detachable from each other or that they are permanently coupled together.

As used herein, "interconnected" may imply that each component is directly or indirectly linked to every other component or switch in the network, allowing for seamless data transfer and communication between all the components.

As used herein, "determining" may encompass a variety of actions. For example, "determining" may include calculating, computing, processing, deriving, investigating, ascertaining, and/or the like. Furthermore, "determining" may also include receiving (e.g., receiving information), accessing (e.g., accessing data in a memory), and/or the like. Also, "determining" may include resolving, selecting, choosing, calculating, establishing, and/or the like. Determining may also include ascertaining that a parameter matches a predetermined criterion, including that a threshold has been met, passed, exceeded, satisfied, etc.

It should be understood that the word "exemplary" is used herein to mean "serving as an example, instance, or illustration." Any implementation described herein as "exemplary" is not necessarily to be construed as advantageous over other implementations.

Furthermore, as would be evident to one of ordinary skill in the art in light of the present disclosure, the terms "substantially" and "approximately" indicate that the referenced element or associated description is accurate to within applicable engineering tolerances.

### Example System Environment

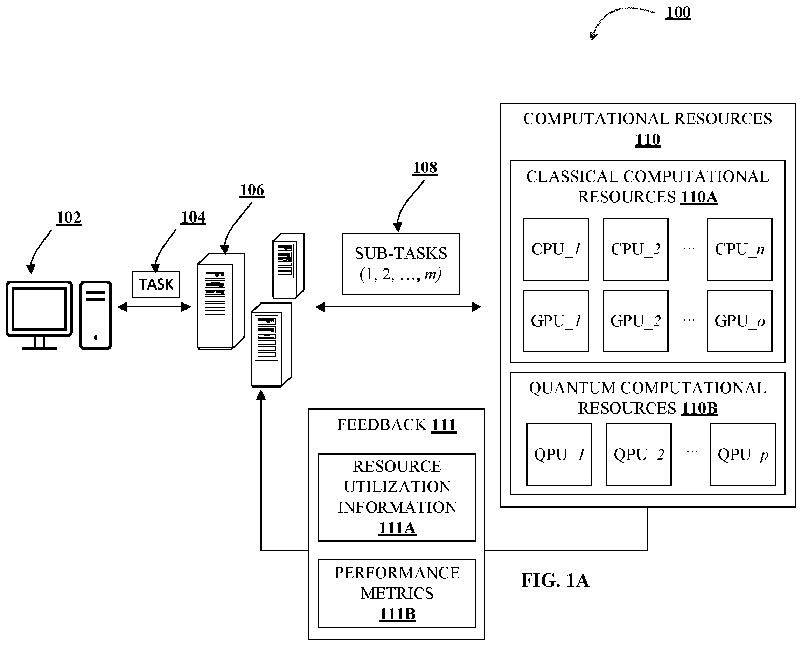

FIGS. 1A-1B illustrate an example system environment 100 for resource allocation in a hybrid distributed computational environment, in accordance with an embodiment of the present disclosure. As shown in FIG. 1A, the system environment 100 may include an end-point device 102, a system 106, and computational resources 110. FIG. 1A illustrates only one example of an embodiment of the system environment 100, and it will be appreciated that in other embodiments one or more of the systems, units, devices, and/or servers may be combined into a single system, unit, device, or server, or be made up of multiple systems, devices, or servers. Also, the system environment 100 may include multiple units, same or similar to system 106, with each unit providing portions of the necessary operations. In particular, some or all of the one or more CPU, GPU or QPUs may be embodied on a single device. In other embodiments, some or all of the one or more CPU, GPU or QPUs may be separate devices that are physically separated (e.g., remotely connected via the quantum channel). The CPUs or the GPUs may be in communication with the one or more QPUs via a classical interconnect (e.g., a computer bus). In some embodiments, the CPUs may be physically separate from the one or more QPUs and configured to remotely connect to the one or more QPUs via the classical interconnect. For example, the system 106 may be a portion of a high-performance computing network.

The end-point device 102 may encompass a diverse range of electronic devices characterized by their capacity for data processing and connectivity. As such, an end-point device 102 may include personal digital assistants, which offer compact computing functionalities; cellular telephones and smartphones, which provide voice and data communication capabilities; and computing devices such as laptops and desktops, known for their versatile computing power and user interface options. Additionally, the scope of end-point devices may extend to edge devices, exemplified by routers and routing switches used to direct data traffic, and integrated access devices (IADs), which facilitate access to various communication services.

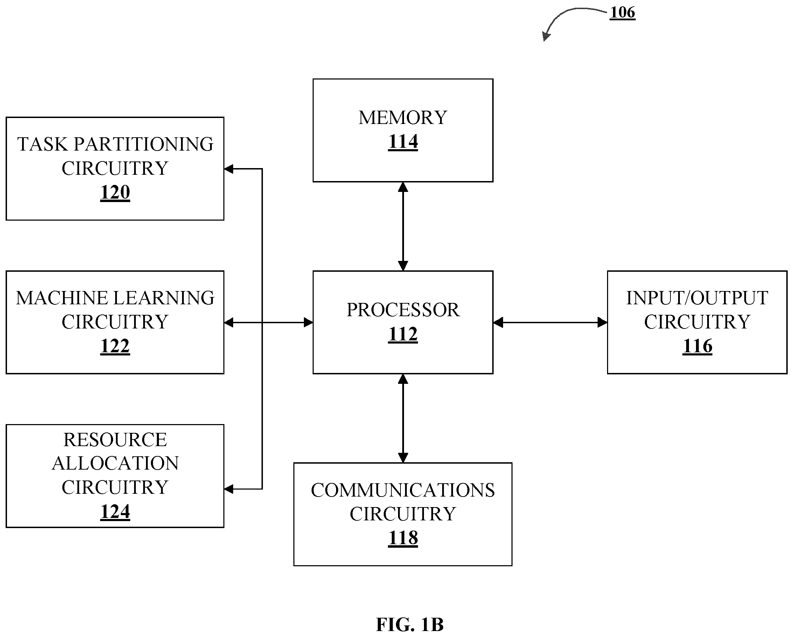

The system 106, as described in more detail in FIG. 1B, may represent various forms of servers, such as web servers, database servers, file servers, or the like, various forms of digital computing devices, such as laptops, desktops, workstations, or the like, or any other auxiliary network devices, Internet-of-things devices, mainframes, or the like, or any combination of the aforementioned. The system 106 may be implemented in a number of different forms. For example, the system 106 may be implemented as a standard server, or multiple times in a group of such servers. Additionally, the system 106 may also be implemented as part of a rack server system or a personal computer such as a laptop computer. Alternatively, components from the system 106 may be combined with one or more other same or similar units, and an entire unit may be made up of multiple computing devices communicating with each other.

The computational resources 110 may refer to components in information processing systems, encompassing both hardware and software elements that enable the execution of computational tasks. Computational resources 110 may include various types of processing units, memory systems, storage devices, networking components, and/or the like. The primary function of computational resources 110 may be to perform calculations, process data, and execute instructions as required by different applications. The efficiency and capability of computational resources 110 impact the overall performance of computing systems, influencing factors such as processing speed, data throughput, and system scalability.

As shown in FIG. 1A, the computational resources 110 may include classical computational resources 110A and quantum computational resources 110B. Classical computational resources may include CPUs (e.g., general-purpose processors capable of handling a wide range of computing tasks), GPUs (e.g., specialized processors designed for parallel processing, particularly effective in handling tasks such as graphics rendering, scientific simulations, and machine learning computations), FPGAs, Digital Signal Processors (DSPs), and/or the like. Quantum computational resources may include QPUs (e.g., processors that leverage the principles of quantum mechanics to perform quantum operations, enabling the execution of tasks involving quantum superposition, entanglement, and other quantum phenomena). Classical computational resources 110A may include a variety of processing units and components traditionally used in computing systems. Classical computational resources 110A may include CPUs (e.g., CPU_1, CPU_2, ..., CPU_n). CPUs may be configured to handle a wide range of general-purpose computing tasks. CPUs may be capable of performing arithmetic operations, managing data flow, and executing instructions necessary for running operating systems, application software, and/or the like. CPUs may be used in various applications, including office productivity software, internet browsing, and basic computational tasks. Classical computational resources 110A may also include GPUs (e.g., GPU_1, GPU_2, ..., GPU_o). GPUs, initially created to manage and accelerate the rendering of images and video, have evolved into powerful parallel processors. GPUs may be particularly efficient at handling tasks that can be broken down into smaller, concurrent operations, making them suitable for applications in scientific computing, data analysis, machine learning, and complex simulations. GPUs may be widely used in fields requiring significant computational power, such as deep learning, molecular modeling, large-scale data processing, and quantum computing simulation. Classical computational resources may also include FPGAs, Digital Signal Processors (DSPs), and/or the like.

In certain embodiments, components from a CPU or GPU may be configured to operate in conjunction with similar units, forming a cohesive classical computational resource network. Such a classical computational resource network can be composed of multiple classical computing devices (e.g., CPU_1, CPU_2, ..., CPU_n, and GPU_1, GPU_2, ..., GPU_o), each communicating and collaborating to perform complex computational tasks. The classical computational resources 110A, in their diverse forms, may represent specialized servers such as database servers, application servers, or other server types optimized for specific classical computing tasks. The classical computational resource network can leverage the collective processing power of multiple CPUs and GPUs to enhance performance and efficiency. For example, in a data center environment, multiple servers equipped with CPUs and GPUs can work together to handle large-scale data processing, support high-demand applications, and execute parallel computations. Such a collaborative approach allows the system to scale its computational capabilities to meet the demands of various applications, from enterprise-level data management to real-time processing in scientific research and complex simulations.

Quantum computational resources 110B may include a variety of QPUs (e.g., QPU_1, QPU_2, ..., QPU_p) capable of performing quantum operations by leveraging the principles of quantum mechanics to process information in fundamentally different ways compared to classical processors. QPUs may be configured to handle tasks that involve quantum superposition and entanglement, enabling them to solve certain classes of problems more efficiently than classical computational resources. QPUs may utilize qubits or qutrits instead of classical bits. Unlike classical bits, which can exist in one of two states (0 or 1), qubits can exist in a superposition of states, enabling them to perform multiple computations simultaneously. In some embodiments, quantum operations may be executed by applying a sequence of quantum gates, which are the building blocks of quantum circuits. These quantum gates may perform unitary operations on qubits, changing their state. Examples of quantum gates may include Hadamard gate, Controlled NOT (CNOT) gate, SWAP gate, and/or the like. Each QPU may generate and manipulate entangled states, a fundamental quantum resource. Entanglement may refer to a phenomenon where qubits become interdependent, such that the state of one qubit instantaneously influences the state of another, regardless of the distance separating them. Due to superposition and entanglement, each QPU can perform many calculations in parallel.

QPUs may be realized using various technologies, such as superconducting loops, trapped ions, neutral atoms, photonics, and topological materials, each of which has its own strengths and weaknesses. QPUs utilizing superconducting technology may be made from superconducting loops in frozen circuits. Superconducting loops-based quantum computing units show potential for scalability to large numbers of qubits; however, they may be sensitive to environmental factors and require near absolute zero temperatures to function. QPUs utilizing trapped ion technology may use ions held in electric fields, with qubits encoded in their electronic states. Trapped ions-based quantum computing units may be notable for their stability, long coherence times, and good error correction potential. Despite these strengths, their complex setup and limited scalability pose significant challenges. QPUs utilizing neutral atom technology may employ ultracold atoms trapped with lasers, with qubits encoded in their internal states. Neutral atom based QPUs may be controllable and less sensitive to noise, making them a promising option for large-scale quantum simulations; however, they may be technically challenging to implement and remain in the early stages of development. QPUs utilizing photonic technology may use light (photons) to carry and process quantum information. Photonic technology-based quantum computing units may offer scalability and potential for long-distance communication; however, the creation and manipulation of photonic qubits may be complex, presenting implementation challenges. QPUs utilizing topological technology exploit the exotic properties of materials to achieve fault-tolerant qubits. Topological technology-based QPUs may be immune to errors and long-term scalability; however, their implementation capability requires further advancements to achieve practical applications.

Each QPU may be implemented in various configurations to suit differing computational needs and environments. For instance, a QPU may be implemented as a dedicated quantum server, which could be singular or replicated across multiple units within a server cluster. Furthermore, a QPU may be part of a more complex unit, such as a quantum-enabled rack server setup, or integrated within advanced computing systems, including high-performance workstations specifically designed for quantum computations. In certain embodiments, each QPU may be configured to operate in conjunction with similar units, forming a cohesive quantum computational resource network. Such a quantum computational resource network can be composed of multiple QPUs (e.g., QPU_1, QPU_2, ..., QPU_p), each communicating and collaborating to perform complex quantum computations. The quantum computational resources 110B, in their diverse forms, may represent specialized servers such as quantum database servers, quantum simulation servers, or other server types optimized for specific quantum computing tasks.

QPUs may take the form of various digital quantum devices each designed to leverage the unique properties of quantum computing. QPUs may also take the form of auxiliary network devices and Internet-of-Things (IoT) devices that are quantum-capable, thereby improving their computational capabilities. In more extensive and demanding computational scenarios, the QPUs could be implemented in mainframe systems, offering large-scale quantum processing power.

In specific embodiments, the computational resources 110 may represent the available computational resources within the system environment 100. Not all computational resources in the system environment 100 may be available at any given time, as some may already be in use for ongoing tasks. Embodiments of the disclosure focus on the computational resources that are currently free and ready for allocation to new tasks, without disturbing the computational resources already engaged in other computations. However, under specific conditions and governed by priority protocols, it may be permissible to reallocate computational resources currently allocated to other tasks within the system environment 100. Such reallocation may occur when high-priority tasks necessitate immediate access to additional computational power. In such cases, the system 106 may dynamically adjust resource allocation, temporarily reallocating resources from lower-priority tasks.

A user may submit a task (e.g., task 104) for execution to the system 106 via the end-point device 102. In an example embodiment, a task may be to run a quantum circuit. In quantum computing, a quantum circuit may refer to a model for quantum computation, similar to classical circuits, in which a computation is a sequence of quantum gates, measurements, initializations of qubits to known values, and possibly other actions. The end-point device 102 may communicate the task 104 to the system 106, initiating the computational workflow. Upon receiving the task 104, the system 106 may analyze the task 104 to determine the optimal approach for processing. The optimal approach may include partitioning the task 104 into multiple sub-tasks 108 (e.g., SUB-TASK_1, SUB-TASK_2, ..., SUB-TASK_m), each of which can be executed independently. In examples where the task is a quantum circuit, each sub-task may be a quantum sub-circuit - a distinct segment or portion of a larger quantum circuit. The partitioning process may consider factors such as the nature of the computational workload, dependencies among sub-tasks, and the specific requirements of each sub-task. Once the task 104 is partitioned into sub-tasks 108, the system 106 may proceed to allocate each sub-task to an appropriate computational resource. The system 106 may consider both classical computational resources 110A and quantum computational resources 110B for this allocation. After the sub-tasks 108 are allocated to the respective computational resources, the system 106 may manage the execution of each sub-task. Monitoring execution of each sub-task may include monitoring the progress, managing data flow, and ensuring that the sub-tasks are executed in a coordinated manner. The system 106 may handle any dependencies among sub-tasks, such that the sub-tasks are processed in the correct sequence. Upon completion of all sub-tasks 108, the system 106 may collect the results from the computational resources 110. The results may then be aggregated and processed to produce the final output for the task 104.

Multiple tasks may be received concurrently by the system 106 via the end-point device 102. Each task, whether a quantum circuit or another computational operation, may be analyzed to determine the optimal approach for processing. Such a process may involve partitioning each task into multiple sub-tasks, similar to the approach used for individual tasks. The partitioning process may consider factors such as the nature of the computational workload, dependencies among sub-tasks, and the specific requirements of each sub-task. Once partitioned, the sub-tasks from each task may be allocated to the appropriate computational resources. The system 106 may manage the execution of all sub-tasks, ensuring that dependencies are handled and that tasks are processed in the correct sequence. Such concurrent task processing may allow the system 106 to utilize available computational resources, balancing the workload and optimizing performance. Upon completion of all sub-tasks, the system 106 may aggregate the results from the various computational resources to produce the final output for each task.

As shown in FIG. 1A, the system environment 100 may include a feedback mechanism using which the system 106 may collect feedback 111 associated with the execution of each sub-task. The feedback 111 may include resource utilization information 111A and performance metrics 111B. Resource utilization information 111A may include information associated with the specific computational units employed to execute each sub-task and the extent to which each unit was utilized. For instance, resource utilization information 111A may indicate that each of CPU_1 and GPU_2 was utilized to execute a particular sub-task, specifying metrics such as CPU_1's utilization rate at 75% and GPU_2's utilization rate at 60%. Such granular data may enable the system 106 to monitor the load and efficiency of each computational resource, thereby facilitating more informed and effective allocation decisions for subsequent tasks. Performance metrics 111B may include information associated with operational parameters, such as execution time, latency, throughput, error rates, resource idle time, and/or the like. For example, performance metrics 111B may include the total execution time for a sub-task, the latency between task submission and initiation, data transfer rates between computational units, the frequency and types of errors encountered during execution, and/or the like. Performance metrics 111B may be used for identifying bottlenecks, assessing resource efficiency, and highlighting areas requiring performance optimization. The feedback mechanism may enable the system 106 to iteratively refine its operational efficiency. By analyzing resource utilization information 111A and performance metrics 111B, the system 106 may dynamically adjust the allocation of computational resources to optimize performance. Such a continuous improvement process may ensure that the system 106 adapts to changing computational demands and maximizes the effective use of resources in real-time. Furthermore, the feedback 111 can be utilized for predictive analysis. By recognizing patterns in resource utilization information 111A and performance metrics 111B, the system 106 can forecast future resource requirements and proactively allocate resources to preempt potential performance issues.

In some embodiments, the end-point device 102, the system 106, and the computational resources 110 may communicate via a network (not shown). The network may include a distributed network architecture that spans a variety of network types, facilitating a cohesive data communication network that can be managed jointly or individually. The network architecture may support shared communication as well as distributed processing across platforms such as telecommunication networks, local area networks (LAN), wide area networks (WAN), global area networks (GAN), the Internet infrastructure, and/or the like. The network may also integrate emerging networking technologies, including software-defined networking (SDN), network function virtualization (NFV), and next-generation wireless communication standards like 5G. The network may employ secure or unsecure, as well as wireless, wired, and optical interconnection technologies, and/or the like, to accommodate a spectrum of communication and processing needs.

It is to be understood that the structure of the system environment 100 and its components, connections and relationships, and their functions, are meant to be exemplary only, and are not meant to limit implementations of the disclosures described and/or claimed in this document. In one example, the system environment 100 may include more, fewer, or different components. In another example, some or all of the portions of the system environment 100 may be combined into a single portion or all of the portions of the environment 100 may be separated into two or more distinct portions.

### Example System Circuitry

FIG. 1B illustrates a schematic block diagram of example circuitry, some or all of which may be included in the system 106. As shown in FIG. 1B, the system 106 may include a processor 112, a memory 114, input/output circuitry 116, communications circuitry 118, and task partitioning circuitry 120, machine learning circuitry 122, and resource allocation circuitry 124. It should be understood that FIG. 1B is merely an illustrative embodiment and the system 106 may include more components, fewer components, or different components than those depicted. The arrangement of the components may also vary. Depending on specific implementation requirements, the system 106 may incorporate additional components or omit certain components. Variations in the configuration and composition of the system 106 are within the scope of the disclosure.

Although the term "circuitry" as used herein with respect to components 112-124 is described in some cases using functional language, it should be understood that the particular implementations necessarily include the use of particular hardware configured to perform the functions associated with the respective circuitry as described herein. It should also be understood that certain of these components 112-124 may include similar or common hardware. For example, two sets of circuitries may both leverage use of the same processor, network interface, storage medium, or the like to perform their associated functions, such that duplicate hardware is not required for each set of circuitries. It will be understood in this regard that some of the components described in connection with the system 106 may be housed together, while other components are housed separately (e.g., a controller in communication with the system 106). While the term "circuitry" should be understood broadly to include hardware, in some embodiments, the term "circuitry" may also include software for configuring the hardware. For example, in some embodiments, "circuitry" may include processing circuitry, storage media, network interfaces, input/output devices, and the like. In some embodiments, other elements of the system 106 may provide or supplement the functionality of particular circuitry. For example, the processor 112 may provide processing functionality, the memory 114 may provide storage functionality, the communications circuitry 118 may provide network interface functionality, and the like.

In some embodiments, the processor 112 (and/or co-processor or any other processing circuitry assisting or otherwise associated with the processor) may be in communication with the memory 114 via a bus for passing information among components of, for example, the system 106. The memory 114 may be non-transitory and may include, for example, one or more volatile and/or non-volatile memories, or some combination thereof. In other words, for example, the memory 114 may be an electronic storage device (e.g., a non-transitory computer readable storage medium). The memory 114 may be configured to store information, data, content, applications, instructions, or the like, for enabling an apparatus, e.g., the system 106, to carry out various functions in accordance with example embodiments of the present disclosure.

Although illustrated in FIG. 1B as a single memory, the memory 114 may comprise a plurality of memory components. The plurality of memory components may be embodied on a single computing device or distributed across a plurality of computing devices. In various embodiments, the memory 114 may comprise, for example, a hard disk, random access memory, cache memory, flash memory, a compact disc read only memory (CD-ROM), digital versatile disc read only memory (DVD-ROM), an optical disc, circuitry configured to store information, or some combination thereof. The memory 114 may be configured to store information, data, applications, instructions, or the like for enabling the system 106 to carry out various functions in accordance with example embodiments discussed herein. For example, in at least some embodiments, the memory 114 may be configured to buffer data for processing by the processor 112. Additionally, or alternatively, in at least some embodiments, the memory 114 may be configured to store program instructions for execution by the processor 112. The memory 114 may store information in the form of static and/or dynamic information. This stored information may be stored and/or used by the system 106 during the course of performing its functionalities.

The processor 112 may be embodied in a number of different ways and may, for example, include one or more processing devices configured to perform independently. Additionally, or alternatively, the processor 112 may include one or more processors configured in tandem via a bus to enable independent execution of instructions, pipelining, and/or multithreading. The processor 112 may, for example, be embodied as various means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. The use of the term "processing circuitry" may be understood to include a single core processor, a multi-core processor, multiple processors internal to the apparatus, and/or remote or "cloud" processors. Accordingly, although illustrated in FIG. 1B as a single processor, in some embodiments, the processor 112 may include a plurality of processors. The plurality of processors may be embodied on a single computing device or may be distributed across a plurality of such devices collectively configured to function as the system 106. The plurality of processors may be in operative communication with each other and may be collectively configured to perform one or more functionalities of the system 106 as described herein.

In an example embodiment, the processor 112 may be configured to execute instructions stored in the memory 114 or otherwise accessible to the processor 112. Alternatively, or additionally, the processor 112 may be configured to execute hard-coded functionality. As such, whether configured by hardware or software methods, or by a combination thereof, the processor 112 may represent an entity (e.g., physically embodied in circuitry) capable of performing operations according to an embodiment of the present disclosure while configured accordingly. Alternatively, as another example, when the processor 112 is embodied as an executor of software instructions, the instructions may specifically configure the processor 112 to perform one or more algorithms and/or operations described herein when the instructions are executed. For example, these instructions, when executed by the processor 112, may cause the system 106 to perform one or more of the functionalities thereof as described herein.

In some embodiments, the system 106 further includes input/output circuitry 116 that may, in turn, be in communication with the processor 112 to provide an audible, visual, mechanical, or other output and/or, in some embodiments, to receive an indication of an input from a user or another source. In that sense, the input/output circuitry 116 may include means for performing analog-to-digital and/or digital-to-analog data conversions. The input/output circuitry 116 may include support, for example, for a display, touchscreen, keyboard, mouse, image capturing device (e.g., a camera), microphone, and/or other input/output mechanisms. The input/output circuitry 116 may include a user interface and may include a web user interface, a mobile application, a kiosk, or the like. The input/output circuitry 116 may interface with the end-point device 102 (FIG. 1A) to receive tasks from and transmit the final aggregated output thereto. These outputs may then be transmitted to one or more other components (e.g., the processor 112) for further action.

The processor 112 and/or user interface circuitry comprising the processor 112 may be configured to control one or more functions of a display or one or more user interface elements through computer-program instructions (e.g., software and/or firmware) stored on a memory accessible to the processor 112 (e.g., the memory 114, and/or the like). In some embodiments, aspects of input/output circuitry 116 may be reduced as compared to embodiments where the system 106 may be implemented as an end-user machine or other type of device designed for complex user interactions. In some embodiments (like other components discussed herein), the input/output circuitry 116 may be eliminated from the system 106. The input/output circuitry 116 may be in communication with memory 114, communications circuitry 118, and/or any other component(s), such as via a bus. Although more than one input/output circuitry and/or other component can be included in the system 106, only one is shown in FIG. 1B to avoid overcomplicating the disclosure (e.g., as with the other components discussed herein).

The communications circuitry 118, in some embodiments, includes any means, such as a device or circuitry embodied in either hardware, software, firmware or a combination of hardware, software, and/or firmware, that is configured to receive and/or transmit data from/to a network and/or any other device, or circuitry associated therewith. In this regard, the communications circuitry 118 may include, for example, a network interface for enabling communications with a wired or wireless communication network. For example, in some embodiments, communications circuitry 118 may be configured to receive and/or transmit any data that may be stored by the memory 114 using any protocol that may be used for communications between computing devices. For example, the communications circuitry 118 may include one or more network interface cards, antennae, transmitters, receivers, buses, switches, routers, modems, and supporting hardware and/or software, and/or firmware/software, or any other device suitable for enabling communications via a network. Additionally, or alternatively, in some embodiments, the communications circuitry 118 may include circuitry for interacting with the antenna(s) to cause transmission of signals via the antenna(e) or to handle receipt of signals received via the antenna(e). These signals may be transmitted by the system 106 using any of a number of wireless personal area network (PAN) technologies, such as Bluetooth^{®} v1.0 through v5.0, Bluetooth Low Energy (BLE), infrared wireless (e.g., IrDA), ultra-wideband (UWB), induction wireless transmission, or the like. In addition, it should be understood that these signals may be transmitted using Wi-Fi, Near Field Communications (NFC), Worldwide Interoperability for Microwave Access (WiMAX) or other proximity-based communications protocols. The communications circuitry 118 may additionally or alternatively be in communication with the memory 114, the input/output circuitry 116, and/or any other component of the system 106, such as via a bus. With reference to FIGS. 1A and 1B, the communication circuitry 118 of the system 106 may also be configured to receive and transmit information with the various components associated therewith and the system environment 100. For instance, the communication circuitry 118 may be configured to communicate with the available computational resources 110 to transmit sub-tasks to, and receive corresponding solutions for sub-tasks from, the computational resources 110. In another instance, the communication circuitry 118 may be configured to communicate with the end-point device 102 to receive the task 104 and transmit the aggregated solution to the end-point device 102.

Referring again to FIG. 1B, the task partitioning circuitry 120, in some embodiments, may be used to facilitate the partitioning of a received task into multiple sub-tasks based on task execution parameters and information associated with the computational resources. Task execution parameters may refer to a set of criteria or requirements that guide the processing of a task within the system 106. In specific embodiments, the task execution parameters may be received along with the task. For example, the task execution parameters may include an execution time, a quantum execution cost, a classical execution cost, a quantum state fidelity, gate error propagation, total task output error, error tolerance, and/or the like. By considering task execution parameters, the task partitioning circuitry 120 may ensure that the sub-tasks meet the specific requirements and constraints of the task, such as deadlines and performance targets. The information associated with the computational resources may provide insight into the current state and capabilities of the available resources, for informed decision-making for optimal task allocation. Such information may include resource availability, processing power, memory, utilization rate, execution time estimates, cost metrics, temperature and thermal limits, failure rate, resource health, load balancing policies, and/or the like associated with each computational resource, including classical computational resources and quantum computational resources. By leveraging information about the computational resources, the task partitioning circuitry 120 may optimize the allocation of available resources for efficient task execution.

The machine learning circuitry 122 may be configured to determine task partitioning parameters (e.g., a set of criteria or guidelines used to divide a primary task into smaller, more manageable sub-tasks) based on the task, task execution parameters, and information associated with computational resources. To this end, in some embodiments, the machine learning circuitry 122 may be configured to deploy a trained machine learning model on the task, task execution parameters, and information associated with computational resources. The machine learning model may represent what was learned by the selected machine learning algorithm and represents the rules, numbers, and any other algorithm-specific data structures required for decision-making. Selecting the right machine learning algorithm may depend on a number of different factors, such as the problem statement and the kind of output needed, type and size of the data, the available computational time, number of features and observations in the data, and/or the like. Machine learning algorithms may refer to programs that are configured to self-adjust and perform better as they are exposed to more data. To this extent, machine learning algorithms are capable of adjusting their own parameters, given feedback on previous performance, in making predictions about a dataset. The task partitioning parameters may include one or more of: a number of edges of tasks/circuits after cutting/partitioning; a cluster size, e.g. number of qubits in a sub-task/sub-circuit; a number or max number of entangled states at an edge of a sub-task/sub-circuit; and a minimum size or amount of available computational resources required for execution.

The machine learning algorithms contemplated, described, and/or used herein include supervised learning (e.g., using logistic regression, using back propagation neural networks, using random forests, decision trees, etc.), unsupervised learning (e.g., using an Apriori algorithm, using K-means clustering), semi-supervised learning, reinforcement learning (e.g., using a Q-learning algorithm, using temporal difference learning), and/or any other suitable machine learning model type. Each of these types of machine learning algorithms can implement any of one or more of a regression algorithm (e.g., ordinary least squares, logistic regression, stepwise regression, multivariate adaptive regression splines, locally estimated scatterplot smoothing, etc.), an instance-based method (e.g., k-nearest neighbor, learning vector quantization, self-organizing map, etc.), a regularization method (e.g., ridge regression, least absolute shrinkage and selection operator, elastic net, etc.), a decision tree learning method (e.g., classification and regression tree, iterative dichotomiser 3, C4.5, chi-squared automatic interaction detection, decision stump, random forest, multivariate adaptive regression splines, gradient boosting machines, etc.), a Bayesian method (e.g., naïve Bayes, averaged one-dependence estimators, Bayesian belief network, etc.), a kernel method (e.g., a support vector machine, a radial basis function, etc.), a clustering method (e.g., k-means clustering, expectation maximization, etc.), an associated rule learning algorithm (e.g., an Apriori algorithm, an Eclat algorithm, etc.), an artificial neural network model (e.g., a Perceptron method, a back-propagation method, a Hopfield network method, a self-organizing map method, a learning vector quantization method, etc.), a deep learning algorithm (e.g., a restricted Boltzmann machine, a deep belief network method, a convolution network method, a stacked auto-encoder method, etc.), a dimensionality reduction method (e.g., principal component analysis, partial least squares regression, Sammon mapping, multidimensional scaling, projection pursuit, etc.), an ensemble method (e.g., boosting, bootstrapped aggregation, AdaBoost, stacked generalization, gradient boosting machine method, random forest method, etc.), and/or the like.

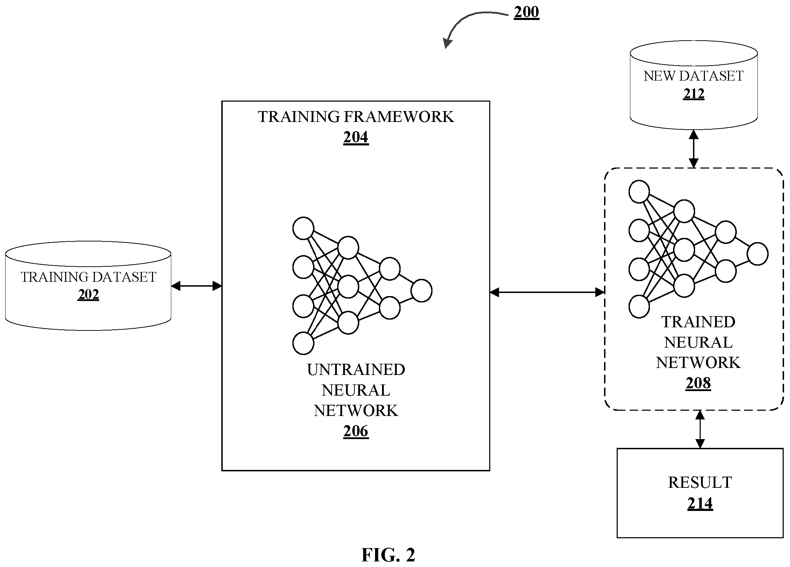

The machine learning model may be trained using repeated execution cycles of experimentation, testing, and tuning to modify the performance of the machine learning algorithm and refine the results in preparation for deployment of those results for consumption or decision making, as described in more detail in FIG. 2 with respect to a deep neural network training and deployment example. Here, the machine learning model may be trained using a plurality of known tasks, a plurality of known sub-tasks for each known task, known task execution parameters for each known task, and known information associated with the computational resources at a time of execution of the known task. The machine learning model may be tuned by dynamically varying hyperparameters in each iteration (e.g., number of trees in a tree-based algorithm or the value of alpha in a linear algorithm), running the algorithm on the data again, and then comparing its performance on a validation set to determine which set of hyperparameters results in the most accurate model. The accuracy of the machine learning model is the measurement used to determine which set of hyperparameters is best at identifying relationships and patterns between variables in a dataset based on the input, or training data. A fully trained machine learning model is one whose hyperparameters are tuned and model accuracy maximized. Once trained, the trained machine learning model may be used to determine the task partitioning parameters for the task that may dictate how the task should be divided into sub-tasks.

In addition to determining the task partitioning parameters, the machine learning model may also be configured to determine the appropriate computational resource for each sub-task. In this regard, the machine learning model may be configured to analyze the sub-task execution parameters such as computational complexity, required processing power, memory needs, data dependencies, and other specific requirements to execute each sub-task. The requirements of each sub-task may then be dynamically evaluated against the granular information associated with the computational resources to determine an appropriate match. The information associated with the computational resources may include resource availability, processing power, memory, utilization rate, execution time estimates, cost metrics, temperature and thermal limits, failure rate, resource health, load balancing policies, and/or the like. In scenarios in which multiple computational resources could potentially execute a sub-task, the machine learning model may prioritize and select the optimal combination of computational resources based on the task execution parameters, such as minimizing execution time, balancing load, or reducing costs. In example embodiments, the machine learning model may be configured to dynamically adjust resource allocations in real-time based on feedback and changing conditions. If a particular computational resource becomes unavailable or overloaded, the machine learning circuitry 122 may be configured to reassign sub-tasks to alternative computational resources.

In addition to determining the task partitioning parameters and the appropriate computational resource for each sub-task, the machine learning model may be configured to determine an execution sequence for the execution of the sub-tasks using corresponding computational resources. In this regard, the machine learning model may be configured to analyze the dependencies to ensure that sub-tasks that need to be executed sequentially are properly ordered, time the computational resource availability to ensure that the computational resources are continuously engaged, prioritize sub-tasks based on priority level, distribute computational load evenly across the computational resources, and dynamically re-sequence the sub-tasks to adapt to changing computational resources.

Once the task is partitioned, the resource allocation circuitry 124 may allocate each sub-task to an appropriate computational resource. In this regard, the resource allocation circuitry 124 may be configured to transmit control signals to the processor 112, directing the processor 112 to assign each sub-task to a specific computational resource (e.g., a computational resource 110 shown in FIG. 1A). In specific embodiments, the resource allocation circuitry 124 may continuously monitor the performance of each sub-task using feedback mechanisms (e.g., feedback 111 in FIG. 1A). In instances in which there is a need for dynamic adjustments during task execution, the resource allocation circuitry 124 may reassign sub-tasks to different computational resources or modify the allocation strategy in real-time to optimize performance and resource utilization. In this regard, the resource allocation circuitry 124 may be in constant communication with the machine learning circuitry 122 and the task partitioning circuitry 120 to adapt to changing conditions.

In some embodiments, the system 106 may include hardware, software, firmware, and/or a combination of such components, configured to support various aspects of combinatorial optimization as described herein. It should be appreciated that in some embodiments, the task partitioning circuitry 120, the machine learning circuitry 122, and/or the resource allocation circuitry 124 may perform one or more of such example actions in combination with another circuitry of the system 106, such as the memory 114, processor 112, input/output circuitry 116, and communications circuitry 118. For example, in some embodiments, the task partitioning circuitry 120, the machine learning circuitry 122, and/or the resource allocation circuitry 124 utilizes processing circuitry, such as the processor 112 and/or the like, to form a self-contained subsystem to perform one or more of its corresponding operations. In a further example, and in some embodiments, some or all of the functionality of the task partitioning circuitry 120, the machine learning circuitry 122, and/or the resource allocation circuitry 124 may be performed by the processor 112. In this regard, some or all of the example processes and algorithms discussed herein can be performed by at least one processor 112, the task partitioning circuitry 120, the machine learning circuitry 122, and/or the resource allocation circuitry 124. It should also be appreciated that, in some embodiments, the task partitioning circuitry 120, the machine learning circuitry 122, and/or the resource allocation circuitry 124 may include a separate processor, specially configured FPGA, or ASIC to perform its corresponding functions.

Additionally, or alternatively, in some embodiments, the task partitioning circuitry 120, the machine learning circuitry 122, and/or the resource allocation circuitry 124 may use the memory 114 to store collected information. For example, in some implementations, the task partitioning circuitry 120, the machine learning circuitry 122, and/or the resource allocation circuitry 124 may include hardware, software, firmware, and/or a combination thereof, that interacts with the memory 114 to send, retrieve, update, and/or store data.

Accordingly, non-transitory computer readable storage media, which may, for example, be the memory 114, can be configured to store firmware, one or more application programs, and/or other software, which include instructions and/or other computer-readable program code portions that can be executed to direct operation of the system 106 to implement various operations, including the examples described herein. As such, a series of computer-readable program code portions may be embodied in one or more computer-program products and can be used, with a device, system 106, database, and/or other programmable apparatus, to produce the machine-implemented processes discussed herein. It is also noted that all or some of the information discussed herein can be based on data that is received, generated and/or maintained by one or more components of the system 106. In some embodiments, one or more external systems (such as a remote cloud computing and/or data storage system) may also be leveraged to provide at least some of the functionality discussed herein.

### Example Neural Network Training and Deployment

FIG. 2 illustrates training and deployment of a deep neural network 200, in accordance with an embodiment of the disclosure. In at least one embodiment, untrained neural network 206 is trained using a training dataset 202. In at least one embodiment, training framework 204 is a PyTorch framework, whereas in other embodiments, training framework 204 is a TensorFlow, Boost, Caffe, Microsoft Cognitive Toolkit/CNTK, MXNet, Chainer, Keras, Deeplearning4j, or other training framework. In at least one embodiment, training framework 204 trains an untrained neural network 206 and enables it to be trained using processing resources described herein to generate a trained neural network 208. In at least one embodiment, weights may be chosen randomly or by pre-training using a deep belief network. In at least one embodiment, training may be performed in either a supervised, partially supervised, or unsupervised manner.

In at least one embodiment, untrained neural network 206 is trained using supervised learning, wherein training dataset 202 includes an input paired with a desired output for an input, or where training dataset 202 includes input having a known output and an output of neural network 206 is manually graded. In at least one embodiment, untrained neural network 206 is trained in a supervised manner and processes inputs from training dataset 202 and compares resulting outputs against a set of expected or desired outputs. In at least one embodiment, errors are then propagated back through untrained neural network 206. In at least one embodiment, training framework 204 adjusts weights that control untrained neural network 206. In at least one embodiment, training framework 204 includes tools to monitor how well untrained neural network 206 is converging towards a model, such as trained neural network 208, suitable to generating correct answers, such as in result 214, based on input data such as a new dataset 212. In at least one embodiment, training framework 204 trains untrained neural network 206 repeatedly while adjust weights to refine an output of untrained neural network 206 using a loss function and adjustment algorithm, such as stochastic gradient descent. In at least one embodiment, training framework 204 trains untrained neural network 206 until untrained neural network 206 achieves a desired accuracy. In at least one embodiment, trained neural network 208 can then be deployed to implement any number of machine learning operations.

In at least one embodiment, untrained neural network 206 is trained using unsupervised learning, wherein untrained neural network 206 attempts to train itself using unlabeled data. In at least one embodiment, unsupervised learning training dataset 202 will include input data without any associated output data or "ground truth" data. In at least one embodiment, untrained neural network 206 can learn groupings within training dataset 202 and can determine how individual inputs are related to untrained dataset. In at least one embodiment, unsupervised training can be used to generate a self-organizing map in trained neural network 208 capable of performing operations useful in reducing dimensionality of new dataset 212. In at least one embodiment, unsupervised training can also be used to perform anomaly detection, which allows identification of data points in new dataset 212 that deviate from normal patterns of new dataset 212.

In at least one embodiment, semi-supervised learning may be used, which is a technique in which in training dataset 202 includes a mix of labeled and unlabeled data. In at least one embodiment, training framework 204 may be used to perform incremental learning, such as through transferred learning techniques. In at least one embodiment, incremental learning enables trained neural network 208 to adapt to new dataset 212 without forgetting knowledge instilled within trained neural network 208 during initial training.

In at least one embodiment, training framework 204 is a framework processed in connection with a software development toolkit such as an OpenVINO (Open Visual Inference and Neural network Optimization) toolkit. In at least one embodiment, an OpenVINO toolkit is a toolkit such as those developed by Intel Corporation of Santa Clara, CA. In at least one embodiment, OpenVINO comprises logic or uses logic to perform operations described herein. In at least one embodiment, an SoC, integrated circuit, or processor uses OpenVINO to perform operations described herein.

In at least one embodiment, OpenVINO is a toolkit for facilitating development of applications, specifically neural network applications, for various tasks and operations, such as human vision emulation, speech recognition, natural language processing, recommendation systems, and/or variations thereof. In at least one embodiment, OpenVINO supports neural networks such as convolutional neural networks (CNNs), recurrent and/or attention-based neural networks, and/or various other neural network models. In at least one embodiment, OpenVINO supports various software libraries such as OpenCV, OpenCL, and/or variations thereof.

In at least one embodiment, OpenVINO supports neural network models for various tasks and operations, such as classification, segmentation, object detection, face recognition, speech recognition, pose estimation (e.g., humans and/or objects), monocular depth estimation, image inpainting, style transfer, action recognition, colorization, and/or variations thereof.

In at least one embodiment, OpenVINO comprises one or more software tools and/or modules for model optimization, also referred to as a model optimizer. In at least one embodiment, a model optimizer is a command line tool that facilitates transitions between training and deployment of neural network models. In at least one embodiment, a model optimizer optimizes neural network models for execution on various devices and/or processing units, such as a GPU, CPU, PPU, GPGPU, and/or variations thereof. In at least one embodiment, a model optimizer generates an internal representation of a model and optimizes said model to generate an intermediate representation. In at least one embodiment, a model optimizer reduces a number of layers of a model. In at least one embodiment, a model optimizer removes layers of a model that are utilized for training. In at least one embodiment, a model optimizer performs various neural network operations, such as modifying inputs to a model (e.g., resizing inputs to a model), modifying a size of inputs of a model (e.g., modifying a batch size of a model), modifying a model structure (e.g., modifying layers of a model), normalization, standardization, quantization (e.g., converting weights of a model from a first representation, such as floating point, to a second representation, such as integer), and/or variations thereof.

In at least one embodiment, OpenVINO comprises one or more software libraries for inferencing, also referred to as an inference engine. In at least one embodiment, an inference engine is a C++ library, or any suitable programming language library. In at least one embodiment, an inference engine is utilized to infer input data. In at least one embodiment, an inference engine implements various classes to infer input data and generate one or more results. In at least one embodiment, an inference engine implements one or more API functions to process an intermediate representation, set input and/or output formats, and/or execute a model on one or more devices.

In at least one embodiment, OpenVINO provides various abilities for heterogeneous execution of one or more neural network models. In at least one embodiment, heterogeneous execution, or heterogeneous computing, refers to one or more computing processes and/or systems that utilize one or more types of processors and/or cores. In at least one embodiment, Open VINO provides various software functions to execute a program on one or more devices. In at least one embodiment, OpenVINO provides various software functions to execute a program and/or portions of a program on different devices. In at least one embodiment, OpenVINO provides various software functions to, for example, run a first portion of code on a CPU and a second portion of code on a GPU and/or FPGA. In at least one embodiment, OpenVINO provides various software functions to execute one or more layers of a neural network on one or more devices (e.g., a first set of layers on a first device, such as a GPU, and a second set of layers on a second device, such as a CPU).

In at least one embodiment, OpenVINO includes various functionality similar to functionalities associated with a CUDA programming model, such as various neural network model operations associated with frameworks such as TensorFlow, PyTorch, and/or variations thereof. In at least one embodiment, one or more CUDA programming model operations are performed using OpenVINO. In at least one embodiment, various systems, methods, and/or techniques described herein are implemented using OpenVINO.

### Example Embodiments Illustrating Allocation of Computational Resources to Sub-Tasks

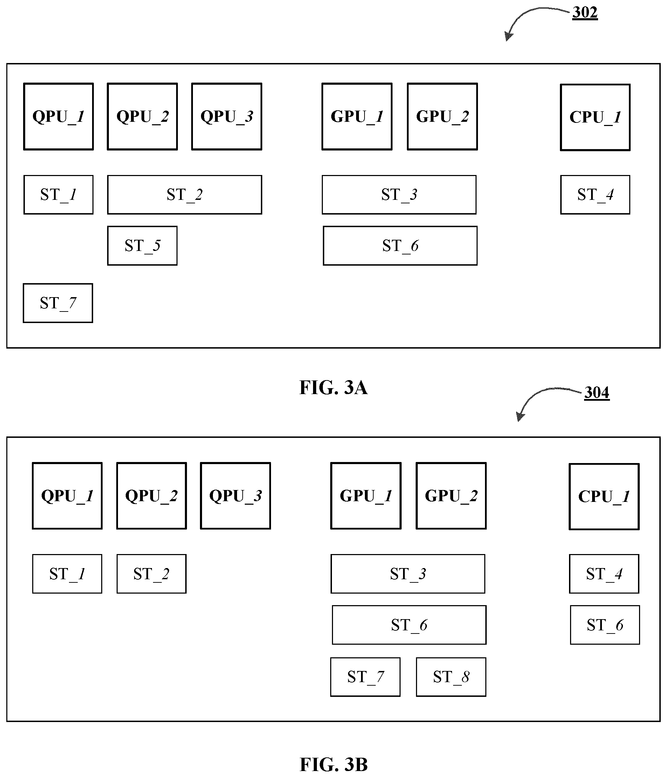

FIGS. 3A and 3B illustrate example embodiments 302 and 304 for allocation of computational resources to sub-tasks. FIG. 3A illustrates an embodiment 302 in which sub-tasks (ST_1, ST_2, ..., ST_7) are allocated across all available computational resources, including classical computational resources (CPU_1, GPU_1, GPU_2) and quantum computational resources (QPU_1, QPU_2, QPU_3). The allocation of sub-tasks to computational resources can follow various patterns to optimize performance and resource utilization. In an example embodiment, each sub-task may be assigned to a single computational resource. For instance, in the depicted embodiment, ST_4 is allocated to CPU_1, ensuring that the resource is dedicated to executing this specific sub-task. In another example embodiment, a single sub-task may be distributed across multiple computational resources. For instance, ST_3 may be assigned to both GPU_1 and GPU_2 allowing parallel execution and leveraging the combined computational power of multiple resources. In still another example embodiment, multiple sub-tasks are assigned to a single computational resource, optimizing resource utilization and balancing workloads. For instance, ST_7 and ST_1 may be assigned to QPU_1, as shown.

FIG. 3B illustrates another embodiment 304 of the allocation of computational resources to sub-tasks, in which sub-tasks (ST_1, ST_2, ..., ST_8) are allocated to a subset of the available computational resources, including classical computational resources (CPU_1, GPU_1, GPU_2) and quantum computational resources (QPU_1, QPU_2, QPU_3). The classical computational resources may be configured to simulate a subset of quantum sub-circuits in parallel, thereby accelerating execution of the quantum circuit. Similar to the allocation in FIG. 3A, the allocation of sub-tasks to computational resources can follow various patterns. In an example embodiment, ST_1 may be allocated to QPU_1, showing that each sub-task may be assigned to a single computational resource. In another example embodiment, ST_3 may be assigned to both GPU_1 and GPU_2, illustrating that a single sub-task may be distributed across multiple computational resources. In still another example embodiment, ST_8 and a portion of ST_3 may be allocated to GPU_2, showing that multiple sub-tasks can be assigned to a single computational resource. Here, QPU_3 remains unallocated, indicating that not all available computational resources are in use, which may be due to the current computational demands or strategic resource reservation.

### Example Method for Resource Allocation in a Hybrid Distributed Computational

### Environment

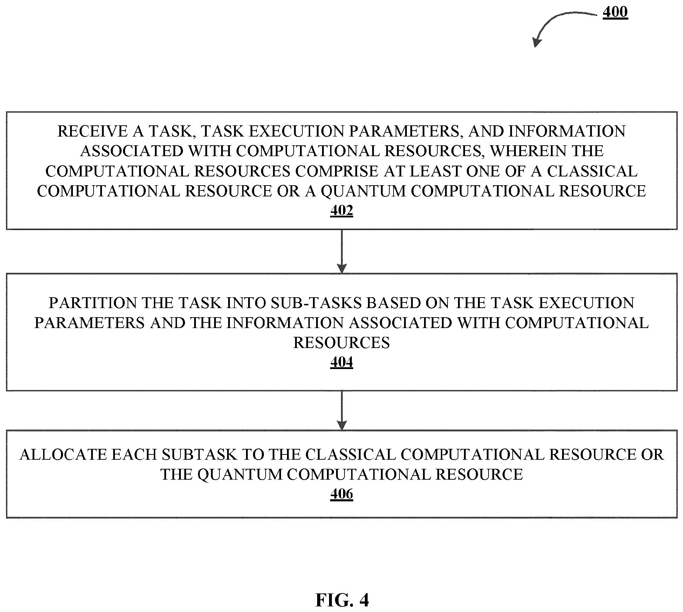

FIG. 4 illustrates a method for resource allocation in a hybrid distributed computational environment 400, in accordance with an embodiment of the disclosure. As shown in block 402, a task, task execution parameters, and information associated with computational resources may be received.

A task may refer to a discrete unit of work or a computational operation intended to be processed by a computational system. A task may be characterized by a set of input data, a specific computational objective, and a defined set of execution parameters. The execution of a task may involve various operations such as data processing, calculations, simulations, or any other computational activity required to achieve the intended outcome. The input data may refer to the data required for the task to be executed. This can include raw data, parameters, or any other relevant information that the task will process. The computational objective may refer to a specific goal or outcome that the task is intended to achieve, such as a result of a calculation, the processing of data, the completion of a simulation, or any other defined objective. The execution parameters, as described herein, may include criteria or requirements that guide the processing of the task within the computational system. These parameters may include a priority level, a deadline, resource requirements, data dependencies, performance metrics, security and compliance requirements, cost constraints, and/or the like.

In example embodiments in which a task is a quantum circuit, the task may be characterized by qubits (or qutrits), quantum gates, measurements, and initializations. The overall structure of the quantum circuit may include the specific arrangement and sequence of these components to achieve a particular computational objective. The structure of the quantum circuit may define how qubits are manipulated and measured to perform the desired quantum computation. The quantum operations in a circuit may be driven by a defined computational objective, which could be solving a problem like factorization (e.g., Shor's algorithm), searching an unsorted database (e.g., Grover's algorithm), or simulating quantum systems. The computational objective may dictate the design and complexity of the quantum circuit.

Computational resources, as described herein, may refer to hardware and software components within a computational system that are utilized to execute tasks and perform computational operations. Computational resources may include classical computational resources and quantum computational resources.

Typically, quantum circuits are executed using quantum computational resources (e.g., QPUs). However, the cost of implementing a quantum gate can vary depending on various factors such as the specific QPU being used, the physical characteristics of the qubits, and the desired level of accuracy. Multi-qubit gates tend to be more expensive to implement than single-qubit gates. Among multi-qubit gates, the CNOT gate may be considered one of the most expensive in terms of physical resources and operational complexity. The CNOT gate, a fundamental gate used for entangling qubits and performing various quantum operations, may require precise control over multiple qubits simultaneously, making it more challenging to implement compared to single-qubit gates. Other multi-qubit gates, such as the Toffoli gate (also known as the Controlled-CNOT gate), which requires three qubits, can be even more resource-intensive to implement than the CNOT gate due to its additional control qubit. Furthermore, executing the associated quantum circuits of the practical quantum algorithms often requires a large number of qubits, which may not be available in a single QPU. On the other hand, the longer the quantum circuit, the higher the chance that the result might be influenced by the environment.

Quantum circuits, however, can also be simulated using classical computational resources (e.g., CPUs, GPUs, and/or the like). Such classical simulations aim to provide an idealized representation of quantum circuits, where noise, decoherence, and other error sources present in real quantum systems can be neglected or simplified. For instance, CPUs can handle complex, sequential operations with high precision, making them suitable for certain types of quantum simulations that require detailed control logic and high numerical accuracy. However, CPUs generally offer slower performance for large-scale quantum circuit simulations due to their limited ability to perform many operations simultaneously. GPUs, however, can accelerate quantum simulations by leveraging their thousands of cores designed for parallel processing, making them well-suited for simulating specific parts of a quantum circuit that can be broken down into independent calculations. However, GPUs may face disadvantages such as increased complexity in programming and less efficiency in tasks that require intricate sequential processing.

Combining the strengths of QPUs, CPUs and GPUs can provide a comprehensive solution to optimize quantum computing processes. QPUs are capable of performing complex quantum operations leveraging superposition and entanglement, which are essential for executing quantum algorithms. CPUs can manage the control logic, resource allocation, and sequential operations required for overall task coordination. GPUs can handle the parallelizable aspects of the computation, such as simulating parts of quantum circuits or performing classical preprocessing and postprocessing tasks. This hybrid approach according to embodiments of the disclosure therefore leverages the strengths of each type of computational resource: the precision and versatility of CPUs, the parallel processing power of GPUs, and the unique quantum capabilities of QPUs.

As described herein, task execution parameters may refer to a set of criteria or requirements that guide the processing of a task. In specific embodiments, the task execution parameters may specify limits on the execution of a task. For example, the task execution parameters may include an execution time, a quantum execution cost, a classical execution cost, a quantum state fidelity, gate error propagation, total task output error, error tolerance, and/or the like. Execution time may refer to time associated with the execution of the task. Quantum execution cost may refer to a cost estimate of quantum computational resources. The quantum execution cost may be determined by factors such as the number of qubits, the number of quantum gates, and the execution time required on quantum hardware (e.g., QPU). The total quantum execution cost may be calculated by multiplying these factors by the cost per unit resource, such as qubit-seconds. Classical execution cost may refer to a cost estimate of classical computational resources. Similar to the quantum execution cost, this metric may measure the computational resources used to execute a task or sub-task on classical hardware (e.g., CPU, GPU). Classical execution costs may account for CPU, GPU, and memory usage, and translate them into monetary costs based on factors such as hardware expenses and cloud usage fees. Quantum state fidelity may assess the accuracy and performance of quantum computations by comparing the actual quantum state produced with the ideal quantum state intended by a set of quantum gates. Quantum state fidelity may refer to how closely the actual state must match the expected state, accounting for errors such as decoherence and gate imperfections. Gate error propagation may refer to a metric that reflects how errors may be introduced in individual quantum gates accumulate throughout the execution of a task (e.g., quantum circuit). Gate error propagation helps in understanding the impact of gate errors on the overall task accuracy, enabling the system to implement error correction strategies and optimize gate usage to minimize error propagation. Total task output error may be determined by comparing the final result obtained after assembling sub-task results with the expected output of the original task, reflecting the combined impact of task partitioning and individual errors on the overall computation. Error tolerance may define the acceptable error thresholds for different applications. Different tasks have varying sensitivity to errors, and this parameter helps determine the optimal approach to task partitioning and resource allocation.

Information associated with computational resources, as described herein, may provide insight into the current state and capabilities of the available resources. Such information may include resource availability, processing power, memory, utilization rate, execution time estimates, cost metrics, temperature and thermal limits, failure rate, resource health, load balancing policies, and/or the like. Resource availability may indicate which computational resources are currently available for task allocation. As such, resource availability may include real-time data on the status of CPUs, GPUs, and QPUs, helping to avoid resource contention and ensuring efficient utilization. Processing power may include the computational capacity of each computational resource, such as clock speed of the CPU, number of cores in the GPUs, and/or the like to determine the suitability of a computational resource for executing specific tasks based on their computational requirements. Memory may refer to the amount of RAM and cache memory available in the computational resources. Utilization rate may refer to the current usage level of each computational resource. Execution time estimates may refer to an estimated time required to complete a task or sub-task on different computational resources. Temperature and thermal limits may refer to the operating temperatures and thermal limits of computational resources. Failure rate may refer to historical data on the reliability and failure rates of computational resources. Resource health may refer to overall health and operational status of computational resources, including metrics like error rates, maintenance needs, and hardware conditions. Load balancing policies may include strategies and policies for distributing computational loads across available computational resources.

As shown in block 404, the task may be partitioned into a plurality of sub-tasks based on the task, the task execution parameters, and information associated with the computational resources. In this regard, the task partitioning can be performed using default partitioning parameters, user-defined partitioning parameters, or rule-based partitioning parameters. Partitioning parameters refer to the criteria or guidelines used to divide a task into smaller, manageable sub-tasks, such that the partitioned sub-tasks are efficiently executable within the constraints and requirements of the computational environment. Default partitioning parameters may refer to pre-configured parameters set by the system based on general best practices and typical use cases, configured to provide a balanced and efficient partitioning strategy without requiring user intervention. Default parameters might include standard sub-task sizes, typical resource allocations, and general execution priorities. User-defined partitioning parameters may refer to parameters specified by the user, allowing for customization based on the unique needs and preferences for a particular task. Rule-based partitioning parameters may refer to parameters are based on a set of predefined rules or algorithms that dictate how tasks should be partitioned. The rules are typically derived from domain-specific knowledge or historical data. Alternatively or additionally, machine learning techniques can be used to define the task partitioning parameters, as described in more detail in FIG. 4. Machine learning models can analyze historical data and current task requirements to determine the most effective way to partition tasks. These machine learning models can adapt to different types of tasks and computational environments, optimizing partitioning parameters in real-time. The machine learning model can determine task partitioning parameters based on live or real time information on or associated with available computational resources at a time of execution. In this way, the task partitioning parameters or circuit cutting is dynamic in that a circuit may be partitioned or cut in different ways at different times depending on the available computational resources at a time of execution. The task/circuit cutting path or portioning, i.e. the way in which the task/circuit is cut, can thus be optimized based at least in part on the task itself and the available computational resources, before the sub-tasks/circuits are allocated to the computation resources. The information on available computational resources may be received from one or more data centers or hybrid data centers comprising the computational resources (i.e. CPUs and/or GPUs, QPUs). The information may be received from a data center orchestration unit of the one or more data centers. The information on available computational resources may comprise at least one of: resource availability (quantum and classical), processing power, memory, utilization rate, execution time estimates, cost metrics, temperature and thermal limits, failure rate, resource health, or load balancing policies

As shown in block 406, upon partitioning the task into sub-tasks, each sub-task is allocated to a classical computational resource or a quantum computational resource. As described herein in FIGS. 3A and 3B, various allocation patterns may be employed. In one embodiment, each sub-task may be assigned to a single computational resource, ensuring dedicated execution. Alternatively, a single sub-task may be distributed across multiple computational resources, allowing parallel execution and leveraging the combined computational power of these resources. Additionally, multiple sub-tasks may be assigned to a single computational resource, optimizing resource utilization and balancing workloads.

### Example Method for Task Partitioning Using Machine Learning Techniques

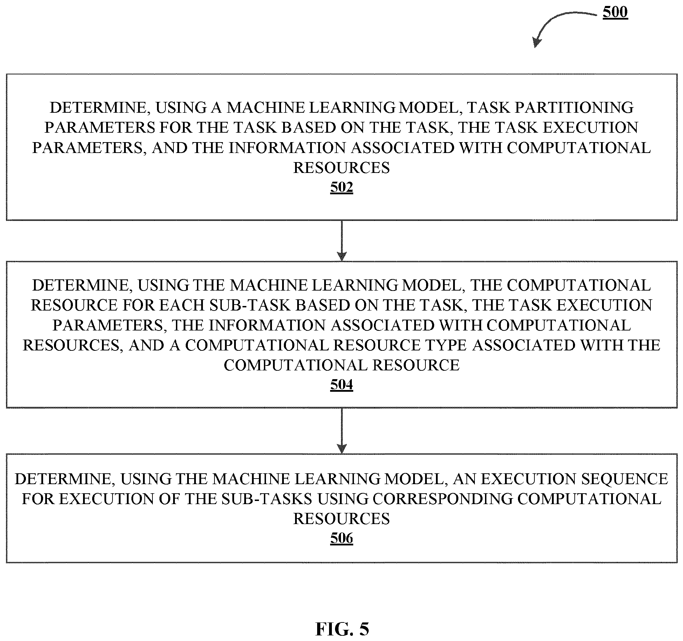

FIG. 5 illustrates a method for task partitioning using machine learning techniques 500, in accordance with an embodiment of the disclosure. As shown in block 502, in some embodiments, the machine learning model is used to determine the task partitioning parameters based on the task, the task execution parameters, and the information associated with the computational resources. As described herein in FIGS. 3A and 3B, the machine learning model may be trained using a using a plurality of known tasks, a plurality of known sub-tasks for each known task, known task execution parameters for each known task, and known information associated with the computational resources at a time of execution of the known task. Through repeated cycles of experimentation, testing, and tuning, the machine learning model may learn to identify optimal partitioning strategies by adjusting its parameters based on feedback from previous performances. Such an iterative training process may refine the machine learning model's ability to predict the most optimal way to divide tasks. Once trained, the machine learning model may be used to determine the task partitioning parameters to partition the task into various sub-tasks. Once determined, the task partitioning parameters may be transmitted to the task partitioning circuitry (as described in connection with FIGS. 3A and 3B) to partition the task into multiple sub-tasks.

As shown in block 504, in some embodiments, the machine learning model is used to determine the computational resource for each sub-task based on the task, the task execution parameters, the information associated with the computational resources, and a computational resource type associated with the computational resource. In addition to determining the task partitioning parameters, the machine learning model may be used to evaluate and allocate resources in real-time. As described herein, the task execution parameters may provide a comprehensive framework to evaluate the specific requirements and constraints of each task. The machine learning model may determine the task execution parameters for specific sub-tasks by analyzing the initial task execution parameters provided for the overall task. The type of computational resource may refer to the specific characteristics of the computational resources, such as the technology underlying a QPU (e.g., trapped ions, superconducting qubits, photonics, topological qubits) or the specifications of a CPU or GPU (e.g., core count, clock speed, memory bandwidth, architecture). By identifying the specific type of CPU, GPU, or QPU, the machine learning model may allocate sub-tasks to the resource that offers the best performance for the given workload. Once determined, the computational resource for each sub-task may be transmitted to the resource allocation circuitry (as described in connection with FIGS. 3A and 3B) to allocate the sub-tasks to corresponding computational resources.

As shown in block 506, the machine learning model may be used to determine an execution sequence for the execution of the sub-tasks using corresponding computational resources. In specific embodiments, the machine learning model may analyze dependencies between sub-tasks, the availability and capabilities of computational resources, and the task execution parameters to establish an optimal order for executing the sub-tasks. In this regard, the machine learning model may sequence the sub-tasks to ensure that those with interdependencies are executed in the correct order, timing the availability of computational resources to maintain continuous engagement, and prioritizing sub-tasks based on their execution parameters, such as priority levels and deadlines. Upon determining the execution sequence, the machine learning model may transmit the sequence to the processor (as described in connection with FIGS. 3A and 3B) to execute the sub-tasks using corresponding computational resources concurrently.

Upon execution, the individual solution associated with each sub-task may be combined to form a comprehensive solution to the original task.

### Example Method for Updating the Machine Learning Model

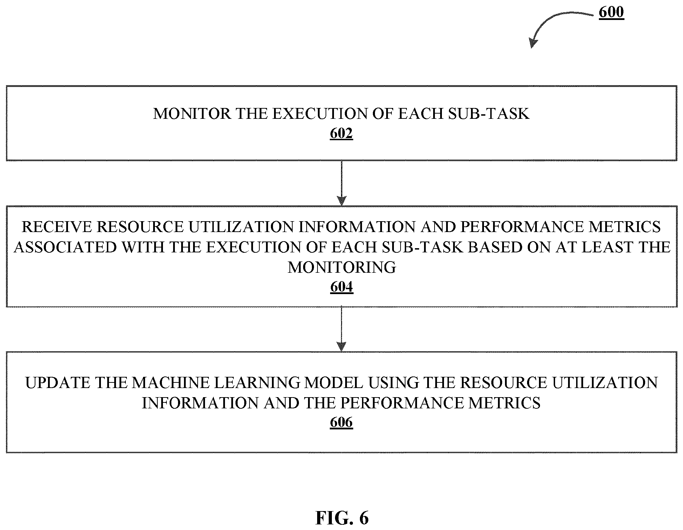

FIG. 6 illustrates a method for updating the machine learning model 600, in accordance with an embodiment of the disclosure. As shown in block 602, the execution of each sub-task may be monitored.

As shown in block 604, the resource utilization information and performance metrics associated with the execution of each sub-task may be received based on the monitoring. As described in connection with FIGS. 1A and 1B, the resource utilization information may include data on how much of each computational resource was used, such as CPU and GPU utilization rates in the execution of each sub-task. Performance metrics may include operational metrics like execution time, latency, throughput, and error rates.

As shown in block 606, the machine learning model may be updated using the resource utilization information and the performance metrics. The resource utilization information and performance metrics may be fed into the machine learning model, which may use this information to improve its predictions and decision-making processes. By incorporating the latest performance and utilization data, the machine learning model can better optimize future task partitioning and resource allocation. For instance, the updated machine learning model may be used to make real-time decisions, such as determining updated task partitioning parameters, updated execution sequence for the execution of the sub-tasks, and/or the like.

### Example GPU/CPU

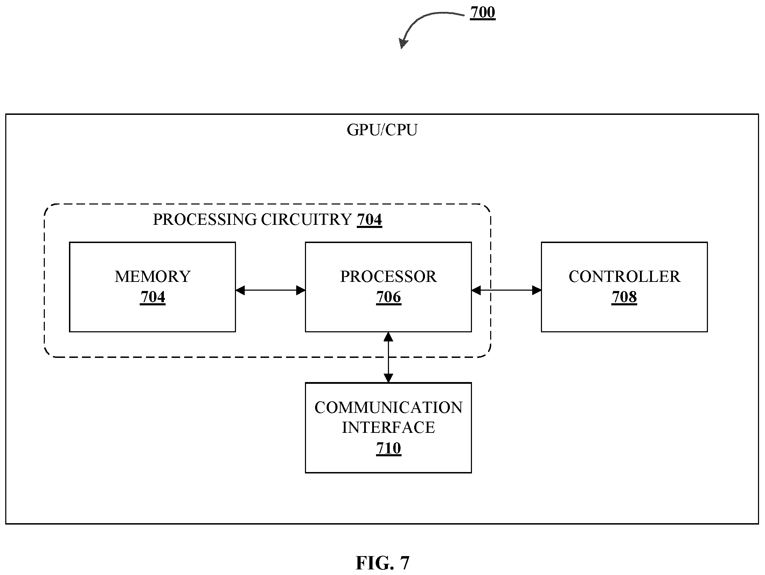

FIG. 7 illustrates an example block diagram of a GPU/CPU (e.g., a block diagram of the GPU/CPU 700 (e.g., classical computation resources 110A), in accordance with an embodiment of the disclosure. As described herein, the GPU/CPU 700 may be communicably coupled to the system 106. It should be noted that the components, devices or elements illustrated in and described with respect to FIG. 7 may not be mandatory and thus one or more may be omitted in certain embodiments. Additionally, some embodiments may include further or different components, devices or elements beyond those illustrated in and described with respect to FIG. 7.

The GPU/CPU 700 may include or otherwise be in communication with processing circuitry 702 that is configurable to perform actions in accordance with one or more example embodiments disclosed herein. In this regard, the processing circuitry 702 may be configured to perform and/or control performance of one or more functionalities of the GPU/CPU 700 in accordance with various example embodiments, and thus may provide means for performing functionalities of the GPU/CPU 700 in accordance with various example embodiments. The processing circuitry 702 may be configured to perform data processing, application execution and/or other processing and management services according to one or more example embodiments. In some embodiments, the GPU/CPU 700 or a portion(s) or component(s) thereof, such as the processing circuitry 702, may be embodied as or comprise a chip or chip set. In other words, the GPU/CPU 700 or the processing circuitry 702 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The GPU/CPU 700 or the processing circuitry 702 may therefore, in some cases, be configured to implement an embodiment of the disclosure on a single chip or as a single "system on a chip." As such, in some cases, a chip or chipset may constitute means for performing one or more operations for providing the functionalities described herein.

In some example embodiments, the processing circuitry 702 may include a processor 706 and, in some embodiments, such as that illustrated in FIG. 7, may further include memory 704. The processing circuitry 702 may be in communication with or otherwise control a communication interface 710 and/or a controller 708. As such, the processing circuitry 702 may be embodied as a circuit chip (e.g., an integrated circuit chip) configured (e.g., with hardware, software or a combination of hardware and software) to perform operations described herein.

The processor 706 may be embodied in a number of different ways. For example, the processor 706 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. Although illustrated as a single processor, it will be appreciated that the processor 706 may comprise a plurality of processors. The plurality of processors may be in operative communication with each other and may be collectively configured to perform one or more functionalities of the GPU/CPU 700 as described herein. The plurality of processors may be embodied on a single computing device or distributed across a plurality of computing devices collectively configured to function as the GPU/CPU 700. In some example embodiments, the processor 706 may be configured to execute instructions stored in the memory 704 or otherwise accessible to the processor 706. As such, whether configured by hardware or by a combination of hardware and software, the processor 706 may represent an entity (e.g., physically embodied in circuitry-in the form of processing circuitry 702) capable of performing operations according to embodiments of the present disclosure while configured accordingly. Thus, for example, when the processor 706 is embodied as an ASIC, FPGA or the like, the processor 706 may be specifically configured hardware for conducting the operations described herein. Alternatively, as another example, when the processor 706 is embodied as an executor of software instructions, the instructions may specifically configure the processor 706 to perform one or more operations described herein.

In some example embodiments, the memory 704 may include one or more non-transitory memory devices such as, for example, volatile and/or non-volatile memory that may be either fixed or removable. In this regard, the memory 704 may comprise a non-transitory computer-readable storage medium. It will be appreciated that while the memory 704 is illustrated as a single memory, the memory 704 may comprise a plurality of memories. The plurality of memories may be embodied on a single computing device or may be distributed across a plurality of computing devices collectively configured to function as the GPU/CPU 700. The memory 704 may be configured to store information, data, applications, instructions and/or the like for enabling the GPU/CPU 700 to carry out various functions in accordance with one or more example embodiments. For example, the memory 704 may be configured to buffer input data for processing by the processor 706. Additionally or alternatively, the memory 704 may be configured to store instructions for execution by the processor 706. As yet another alternative, the memory 704 may include one or more databases that may store a variety of files, contents or data sets. Among the contents of the memory 704, applications may be stored for execution by the processor 706 in order to carry out the functionality associated with each respective application. In some cases, the memory 704 may be in communication with one or more of the processor 706, communication interface 710, or the controller 708 via a bus(es) for passing information among components of the GPU/CPU 700.

In some example embodiments, the GPU/CPU 700 may further include a communication interface 710. In some cases, the communication interface 710 may be any means such as a device or circuitry embodied in either hardware, or a combination of hardware and software that is configured to receive and/or transmit data from/to a network and/or any other device or circuitry in communication with the processing circuitry 702. By way of example, the communication interface 710 may be configured to enable the GPU/CPU 700 to communicate with the one or more communication modules and/or other quantum or classical computing devices. In this regard, for example, the communication interface 710 may be configured to be an analog to quantum communication bridge configured to covert physical layer digital signal representations from and/or to qubit states. The communication interface 710 may, for example, include an antenna (or multiple antennas) and supporting hardware and/or software for enabling communications with a wireless communication network (e.g., a wireless local area network, cellular network, and/or the like) and/or a communication modem or other hardware/software for supporting communication via cable, digital subscriber line (DSL), universal serial bus (USB), Ethernet or other methods.

In some example embodiments, the GPU/CPU 700 may include or otherwise control a controller 708. As such, the controller 708 may be embodied as various means, such as circuitry, hardware, a computer program product comprising computer readable program instructions stored on a computer readable medium (for example, the memory 704) and executed by a processing device (for example, the processor 706), or some combination thereof. The controller 708 may be capable of communication with one or more of the memory 704 or communication interface 710 to access, receive, and/or send data as may be needed to perform one or more of the functionalities of the controller 708 as described herein.

### Example Distributed Quantum Computing System

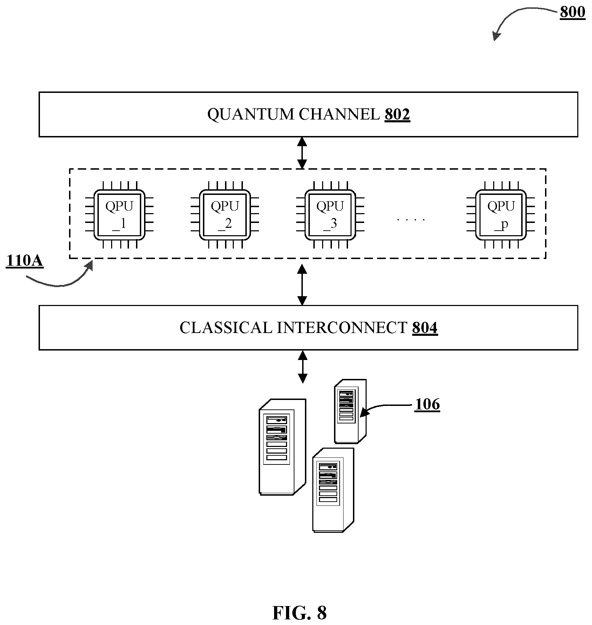

FIG. 8 illustrates an example quantum computational resource 800 for executing sub-tasks (e.g., solving a quantum algorithm), in accordance with an embodiment of the disclosure. As shown in FIG. 1, the quantum computational resource 800 may one or more QPUs (e.g., QPU_1, QPU_2, ..., QPU_p, each configured to perform one or more operations associated with a sub-task. In some embodiments, some or all of the one or more QPUs may be embodied on a single device. In other embodiments, some or all of the one or more QPUs may be separate devices that are physically separated (e.g., remotely connected via the quantum channel 802). In certain configurations, the QPUs may be interconnected via quantum channels (e.g., quantum channel 802), thereby enabling the execution of quantum circuits that necessitate entanglement between some of the sub-tasks. The quantum channel 802 may be configured to transmit quantum information (e.g., qubits) and/or classical information (e.g., binary bits) between the QPUs. Although illustrated and described herein with reference to a single quantum channel 802, the present disclosure contemplates that the distributed computational resource 110 may include any number of interconnected or distinct quantum channels based upon the intended application of the quantum computational resource 800. In some embodiments, the system 106 may be configured to instruct the one or more QPUs to perform one or more operations associated with sub-tasks via the classical interconnect 804. For example, in some embodiments, a user or operator associated with the system 106 may connect to the quantum computational resource 800 via the system 106 and may use the system 106 to execute sub-tasks using the quantum computational resource 800. In some embodiments, the quantum computational resource 800 may be configured to execute multiple sub-tasks concurrently, as described in detail in FIG. 3A and 3B.

The disclosure of this application also includes the following numbered clauses.

Clause 1. A system comprising: a task partitioning circuitry configured to: receive one or more tasks, task execution parameters, and information associated with computational resources, wherein the computational resources comprise at least one of a classical computational resource or a quantum computational resource, wherein the classical computational resource comprises a central processing unit (CPU) or a graphics processing unit (GPU), and wherein the quantum computational resource comprises a quantum processing unit (QPU); and partition each task into sub-tasks based on the task execution parameters and the information associated with computational resources; and a resource allocation circuitry operatively coupled to the task partitioning circuitry and configured to: allocate each sub-task to the classical computational resource or the quantum computational resource.

Clause 2. The system of Clause 1, wherein each task is a quantum circuit, and wherein the sub-tasks are quantum sub-circuits.

Clause 3. The system of Clause 1, further comprising a machine learning circuitry operatively coupled to the task partitioning circuitry and configured to: determine, using a machine learning model, task partitioning parameters for each task based on the task, the task execution parameters, and the information associated with computational resources, wherein partitioning each task into sub-tasks further comprises using the task partitioning parameters.

Clause 4. The system of Clause 3, wherein the machine learning circuitry is further configured to: determine, using the machine learning model, the computational resource for each sub-task based on the corresponding task, the task execution parameters, the information associated with computational resources, and a computational resource type associated with the computational resource.

Clause 5. The system of Clause 3, wherein the machine learning circuitry is further configured to: train the machine learning model using a plurality of known tasks, a plurality of known sub-tasks for each known task, known task execution parameters for each known task, and known information associated with the computational resources at a time of execution of the known task, wherein determining the task partitioning parameters for each task comprises using the trained machine learning model.

Clause 6. The system of Clause 3, wherein the machine learning circuitry is further configured to: determine, using the machine learning model, an execution sequence for execution of the sub-tasks using corresponding computational resources; and initiate the execution of the sub-tasks according to the execution sequence.

Clause 7. The system of Clause 6, wherein the sub-tasks are executed using the classical computational resources and quantum computational resources, and wherein at least a subset of the sub-tasks is executed concurrently, thereby accelerating the execution of each task.

Clause 8. The system of Clause 6, wherein the machine learning circuitry is further configured to: monitor the execution of each sub-task; receive resource utilization information and performance metrics associated with the execution of each sub-task based on at least the monitoring; and update the machine learning model using the resource utilization information and the performance metrics.

Clause 9. The system of Clause 8, wherein the machine learning circuitry is further configured to: determine, using the updated machine learning model, updated task partitioning parameters for each task, wherein partitioning each task into sub-tasks further comprises using the updated task partitioning parameters.

Clause 10. The system of Clause 8, wherein the machine learning circuitry is further configured to: determine, using the updated machine learning model, an updated execution sequence for execution of the sub-tasks, wherein initiating the execution of the sub-tasks comprises using the updated execution sequence.

Clause 11. The system of Clause 1, wherein the information associated with the computational resources comprises at least one of resource availability, processing power, memory, utilization rate, execution time estimates, cost metrics, temperature and thermal limits, failure rate, resource health, or load balancing policies.

Clause 12. The system of Clause 1, wherein the task execution parameters comprise at least one of an execution time, a quantum execution cost, a classical execution cost, a quantum state fidelity, gate error propagation, total task output error, or error tolerance.

Clause 13. The system of Clause 1, wherein, the task partitioning circuitry is further configured to: receive a plurality of tasks, task execution parameters associated with each task, and information associated with computational resources; and partition each task into a plurality of sub-tasks based on the corresponding task execution parameters and the information associated with computational resources; and the resource allocation circuitry is further configured to: allocate each of the plurality of sub-tasks to the classical computational resource and the quantum computational resource, wherein the plurality of tasks is executed by the classical computational resource and the quantum computational resource in parallel.

Clause 14. A method comprising: receiving one or more tasks, task execution parameters, and information associated with computational resources, wherein the computational resources comprise at least one of a classical computational resource or a quantum computational resource, wherein the classical computational resource comprises a central processing unit (CPU) or a graphics processing unit (GPU), and wherein the quantum computational resource comprises a quantum processing unit (QPU); partitioning each task into sub-tasks based on the task execution parameters and the information associated with computational resources; and allocating each sub-task to the classical computational resource or the quantum computational resource.

Clause 15. The method of Clause 14, wherein each task is a quantum circuit, and wherein the sub-tasks are quantum sub-circuits.

Clause 16. The method of Clause 14, further comprising: determining, using a machine learning model, task partitioning parameters for each task based on the task, the task execution parameters, and the information associated with computational resources, wherein partitioning each task into sub-tasks further comprises using the task partitioning parameters.

Clause 17. A computer program product comprising a non-transitory computer-readable medium comprising code that, when executed by a processor, causes the processor to: receive, using a task partitioning circuitry, one or more tasks, task execution parameters, and information associated with computational resources, wherein the computational resources comprise at least one of a classical computational resource or a quantum computational resource, wherein the classical computational resource comprises a central processing unit (CPU) or a graphics processing unit (GPU), and wherein the quantum computational resource comprises a quantum processing unit (QPU); partition, using the task partitioning circuitry, each task into sub-tasks based on the task execution parameters and the information associated with computational resources; and allocate, using a resource allocation circuitry, each sub-task to the classical computational resource or the quantum computational resource.

Clause 18. The computer program product of Clause 17, wherein each task is a quantum circuit, and wherein the sub-tasks are quantum sub-circuits.

Clause 19. The computer program product of Clause 17, wherein the code, when executed, further causes the processor to: determine, using a machine learning model, task partitioning parameters for each task based on the task, the task execution parameters, and the information associated with computational resources, wherein partitioning each task into sub-tasks further comprises using the task partitioning parameters.

Clause 20. The computer program product of Clause 19, wherein the code, when executed, further causes the processor to: determine, using the machine learning model, the computational resource for each sub-task based on the corresponding task, the task execution parameters, the information associated with computational resources, and a computational resource type associated with the computational resource.

Many modifications and other embodiments of the present disclosure set forth herein will come to mind to one skilled in the art to which these embodiments pertain having the benefit of the teachings presented in the foregoing descriptions and the associated drawings. Although the figures only show certain components of the methods and systems described herein, it is understood that various other components may also be part of the disclosures herein. In addition, the method described above may include fewer steps in some cases, while in other cases the method may include additional steps. The steps and modifications to the steps of the method described above, in some cases, may be performed in any order and in any combination.

Therefore, it is to be understood that the present disclosure is not to be limited to the specific embodiments disclosed and that modifications and other embodiments are intended to be included within the scope of the appended claims. Although specific terms are employed herein, they are used in a generic and descriptive sense only and not for purposes of limitation.

It will be understood that aspects and embodiments are described above purely by way of example, and that modifications of detail can be made within the scope of the claims. Each feature disclosed in the description, and (where appropriate) the claims and drawings may be provided independently or in any appropriate combination. Reference numerals appearing in the claims are by way of illustration only and shall have no limiting effect on the scope of the claims.

## Claims

1. A method for resource allocation in a hybrid distributed computational environment, comprising:
receiving one or more tasks, task execution parameters, and information associated with computational resources, wherein the computational resources comprise a classical computational resource and a quantum computational resource, wherein the classical computational resource comprises one or more central processing units (CPU) and/or one or more graphics processing units (GPU), and wherein the quantum computational resource comprises one or more quantum processing units (QPU);
determining, using a machine learning model, task partitioning parameters for each task based at least in part on the task, the task execution parameters, and the information associated with computational resources;
partitioning each task into sub-tasks based at least in part on the task partitioning parameters; and
allocating each sub-task to the classical computational resource or the quantum computational resource for execution.

2. The method of Claim 1, wherein each task is a quantum circuit, and wherein the sub-tasks are quantum sub-circuits.

3. The method of Claim 1 or 2, further comprising:
determining, using the machine learning model, the computational resource for each sub-task based on the corresponding task, the task execution parameters, the information associated with computational resources, and a computational resource type associated with the computational resource.

4. The method of any preceding Claim, further comprising:
training the machine learning model using a plurality of known tasks, a plurality of known sub-tasks for each known task, known task execution parameters for each known task, and known information associated with the computational resources at a time of execution of the known task,
wherein determining the task partitioning parameters for each task comprises using the trained machine learning model.

5. The method of any preceding Claim, further comprising:
determining, using the machine learning model, an execution sequence for execution of the sub-tasks using corresponding computational resources; and
initiate the execution of the sub-tasks according to the execution sequence.

6. The method of any preceding Claim, wherein the sub-tasks are executed using the classical computational resources and quantum computational resources, and wherein at least a subset of the sub-tasks are executed concurrently, thereby accelerating the execution of each task.

7. The method of any preceding Claim, wherein the tasks are quantum circuits and the sub-tasks are quantum sub-circuits, and wherein the classical computational resource is configured to emulate a quantum system to simulate a subset of quantum sub-circuits in parallel, thereby accelerating execution of each task, preferably using one or more GPUs.

8. The method of any preceding Claim, wherein a single sub-task is allocated to a single computing resource or distributed across multiple computer resources.

9. The method of any preceding Claim, further comprising:
monitoring the execution of each sub-task;
receiving resource utilization information and performance metrics associated with the execution of each sub-task based on at least the monitoring; and
updating the machine learning model using the resource utilization information and the performance metrics; and/or
dynamically adjusting the allocation of computational resources based on analysis of the resource utilization information and performance metrics.

10. The method of Claim 9, further comprising:
determining, using the updated machine learning model, updated task partitioning parameters for each task, and
wherein partitioning each task into sub-tasks further comprises using the updated task partitioning parameters.

11. The method of Claim 9 or 10, further comprising:
determining, using the updated machine learning model, an updated execution sequence for execution of the sub-tasks, and
wherein initiating the execution of the sub-tasks comprises using the updated execution sequence.

12. The method of any preceding Claim, wherein:
the information associated with the computational resources comprises at least one of resource availability, processing power, memory, utilization rate, execution time estimates, cost metrics, temperature and thermal limits, failure rate, resource health, or load balancing policies; and/or
the task execution parameters comprise at least one of an execution time, a quantum execution cost, a classical execution cost, a quantum state fidelity, gate error propagation, total task output error, or error tolerance; and/or
the method further comprises receiving the information on available computational resources from one or more data centers or hybrid data centers comprising the computational resources.

13. The method of any preceding Claim, further comprising:
receiving a plurality of tasks, task execution parameters associated with each task, and information associated with computational resources;
partitioning each task into a plurality of sub-tasks based on the corresponding task execution parameters and the information associated with computational resources; and
allocating each of the plurality of sub-tasks to the classical computational resource and the quantum computational resource,
wherein the plurality of tasks is executed by the classical computational resource and the quantum computational resource in parallel.

14. A system, comprising one or more processors configured to perform the method of any preceding claim, and preferably
wherein the system comprises computational resources including a classical computational resource and a quantum computational resource, wherein the classical computational resource comprises one or more central processing units (CPU) and/or one or more graphics processing units (GPU), and wherein the quantum computational resource comprises one or more quantum processing units (QPU).

15. A computer program product comprising a non-transitory computer-readable medium comprising code that, when executed by a processor, causes the processor to perform the method of any of claims 1 to 13.
